# EUROPEAN PATENT SPECIFICATION

(11) **EP 2 723 010 B1**
(45) Date of publication and mention of the grant of the patent: **04.05.2016**
(21) Application number: 12189440.6
(22) Date of filing: 22.10.2012
(51) Int. Cl.: H04L 1/00, H04L 1/16, H04L 1/18

(54) **Transmitter and method for transmitting blocks of user data through a channel of variable capacity**
Sender und Verfahren zum Senden von Blöcken von Benutzerdaten über einen Kanal mit variabler Kapazität
Transmetteur et procédé de transmission de blocs de données utilisateur à travers un canal de capacité variable

(43) Date of publication of application: 23.04.2014
(73) Proprietor: Fraunhofer-Gesellschaft zur Förderung der angewandten Forschung e.V., 80686 München (DE)
(72) Inventor: Gamm, Eberhard, 91052 Erlangen (DE); Koch, Robert, 91052 Erlangen (DE); Kilian, Gerd, 91056 Erlangen (DE)
(74) Representative: Stöckeler, Ferdinand

(56) References cited:
- EP-A1- 1 458 128
- EP-A1- 1 465 369
- EP-A1- 2 285 033
- EP-A1- 2 403 174
- EP-A1- 2 458 767
- EP-A2- 0 938 207
- EP-A2- 1 928 130
- EP-A2- 1 976 175
- EP-A2- 2 178 239
- WO-A1-2008/073102
- WO-A1-2008/127164
- WO-A1-2009/106395
- WO-A1-2011/028583
- US-A1- 2003 210 668
- US-A1- 2004 081 123
- US-A1- 2010 083 067
- US-A1- 2010 223 524
- US-A1- 2011 206 065
- US-A1- 2012 051 305
- BALACHANDRAN K ET AL: "Efficient transmission of ARQ feedback for EGPRS radio link control", VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, vol. 3, 19 September 1999 (1999-09-19), pages 1663-1669, XP010353299, DOI: 10.1109/VETECF.1999.801580 ISBN: 978-0-7803-5435-7

## Description

### Technical Field

Embodiments of the present invention relate to transmitter and methods for transmitting blocks of user data through a channel of variable capacity. Further embodiments of the present invention relate to a receiver and method for receiving blocks of user data through a channel of variable capacity.

### Background of the Invention

Wireless communication channels typically have the disadvantage that they are lossy. Furthermore, due to the nature of such wireless communication channels, the capacity C of such wireless communication channels is highly variable. Nevertheless, it is still desired to achieve as high as possible data rates for communications through such wireless communication channels.

EP 2 403 174 A1 discloses a method for transmission of data from a first network node of a radio communication system to a second network node of the radio communication system, wherein the method comprises the steps of transmitting a first negative acknowledgement from the second network node, if the second network node cannot recover error free first user data, determining a combination of second user data comprising parity information of the first user data and of at least one third user data by multiplexing the second user data and the at least one third user data, and transmitting to the second network node the combination.

US 2010/083067 A1 discloses a mobile communication system, in which, when a receiving condition is deteriorated to the extent that reception does not succeed even by means of combination after retransmission to the maximum number of retransmissions, a transmission rate is restricted. The transmission rate is restricted by reducing radio frames assignable to new data, and by setting dedicated retransmission frames, to which retransmission data are assignable, over the maximum number of retransmissions for the reduced transmission rate, thereby enabling a greater number of retransmissions than the maximum number of retransmissions without an increase of a buffer size.

### Summary of the Invention

Hence, it is an objective of embodiments of the present invention to provide a concept which allows an improved communication even through lossy communication channels.

This objective is solved by a transmitter according to claim 1, a receiver according to claim 10 and methods according to claims 19 and 20.

Embodiments of the present invention provide a transmitter for transmitting blocks of user data through a channel of variable capacity. The transmitter comprises an encoder configured to encode each block of user data into a message block and a plurality of incremental redundancy blocks. Furthermore, the transmitter comprises a transmit signal provider configured to provide a transmit signal to be transmitted through the channel. The transmit signal comprises at least one of a number of message blocks and a number of redundancy blocks, depending on the capacity of the channel, and signaling information indicating the number of message blocks in the transmit signal.

Further embodiments of the present invention provide a receiver for receiving blocks of user data through a channel of variable capacity, wherein each block of user data is encoded into a message block and a plurality of incremental redundancy blocks. The receiver comprises a receive interface configured to receive a transmit signal through the channel. The transmit signal comprises at least one of a number of message blocks and a number of incremental redundancy blocks, depending on the capacity of the channel, and signaling information indicating the number of message blocks in the transmit signal. Furthermore, the receiver comprises an entity manager configured to generate, in dependence on the number of message blocks indicated by the signaling information, a number of receive entities, wherein each receive entity is configured to decode an associated block of user data.

It is a core idea that an improved concept for a communication through a lossy channel (having a variable capacity) can be achieved if a communication system (comprising a transmitter and a receiver) can automatically adapt to a change of the channel and therefore to a change of the capacity of the channel. Embodiments of the present invention achieve such an adaption to a changing capacity of the channel by choosing in the transmitter the number of message blocks and (incremental) redundancy blocks in the transmit signal in dependence on the capacity of the channel and furthermore in the receiver by generating in dependence on the number of message blocks in the transmit signal receive entities, wherein each receive entity is configured to decode an associated block of user data. The number of receive entities to be generated in the receiver are signaled by the transmitter in the signaling information comprised in the transmit signal. By having on the transmit side the variability in the number of message blocks and the number of redundancy blocks inserted into the transmit signal in dependence on the capacity of the channel and on the receive side the variability of receive entities for decoding the blocks of user data, a communication system with such a transmitter and receiver can adapt very quickly to the changing capacity of the channel and furthermore it can be achieved that the maximum available capacity of the channel is used as best as possible. As the number of message blocks in the transmit signal and the number of receive .entities in the receiver are not fixed, especially for a high capacity of the channel, high data rates can be achieved, as this in case a high number of message blocks could be inserted into the transmit signal and furthermore a high number of receive entities for decoding the blocks of user data could be generated in the receiver, each receive entity decoding an associated block of user data.

Hence, it is an advantage of embodiments of the present invention that a transmitter according to an embodiment of the present invention and a receiver according to an embodiment of the present invention can adapt to a change in capacity of a communication channel through which blocks of user data are transmitted from the transmitter to the receiver. According to some embodiments of the present invention, the transmitter comprises a receive interface configured to receive a feedback signal indicating changes of states of the receive entities generated in the receiver which are processing the blocks of user data transmitted through the channel. Furthermore, the transmitter comprises an entity manager configured to generate for each block of user data whose message block is inserted into the transmit signal by the transmit signal provider a transmit entity associated to the block of user data and to update a state of the transmit entity in dependence on the received feedback signal. A state of a generated transmit entity indicates if a (and which) redundancy block of the transmit entity's associated block of user data is to be transmitted (next).

By having the entity manager generating the transmit entities and updating the state of the transmit entities in dependence on the received feedback signal, it can be achieved that the transmitter and a receiver communicating with the transmitter always run synchronous without the need of transmitting the state of the transmitter to the receiver and/or the state of the receiver to the transmitter. Hence, by having the synchronous processing in the transmitter and the receiver transmission resources are saved, since the states of transmitter and receiver do not have to be matched during every transmission. Furthermore, as the transmitter generates per block of user data an associated transmit entity and the receiver generates per block of user data an associated receive entity too, each transmit entity associated to a given block of user data has a corresponding receive entity associated to the given block of user data in the receiver. By having the entity manager being configured to update a state of a transmit entity in dependence on the received feedback signal, it can be assured that a pair of a transmit entity and a receive entity associated to the same block of user data always run synchronously without the need of transmitting the state, as it is sufficient to indicate a state change in the receive entity which then leads to a state change in the transmit entity being associated with the same block of user data like the receive entity.

Hence, it is not necessary to define in the feedback signal which redundancy block of a plurality of redundancy blocks of a block of user data is requested by the receive entity, as it is sufficient to just indicate that a new incremental redundancy block is needed at the receive entity. As the transmit entity and the receive entity associated with the same block of user data run synchronous, the transmit entity "knows" which of the plurality of incremental redundancy blocks of the block of user data is to be transmitted to the receive entity. In other words, the transmit signal provider can be configured to, in dependence on a state of a generated transmit entity, insert a chosen incremental redundancy block of the plurality of incremental redundancy blocks of the transmit entity's associated block of user data into the transmit signal. It is to be pointed out again that it is not necessary to indicate in the feedback signal which incremental redundancy block of the plurality of incremental redundancy blocks of the transmit entity's associated block of user data is needed, as this is already known based on the state of the transmit entity.

According to further embodiments of the present invention, a generated receive entity in a receiver is configured to start decoding its associated block of user data by decoding a message block of the generated receive entity's associated block of user data and to, upon an unsuccessful or successful decoding of the message block, update a state of the generated receive entity. Furthermore, the generated receive entity can be configured to, upon reception of at least one incremental redundancy block of the generated receive entity's block of user data in the transmit signal combine the at least one incremental redundancy block with the message block, decode a resulting combined block and upon an unsuccessful or successful decoding of the combined block update its state. In other words, a generated receive entity is configured to update its state after an unsuccessful or successful decoding of a message block or a combined block comprising at least a message block and one incremental redundancy block of the receive entity's associated block of user data. As already described, these status updates can be transmitted by the receiver to the transmitter in the feedback signal such that the transmit entity being associated with the same block of user data as the receive entity can also update its state. In the feedback signal it is not necessary to indicate if the receive entity decoded a message block or a combined block (or even which incremental redundancy blocks were part of the combined block), it is sufficient to indicate if the last decoding was successful (and therefore if the block of user data was decoded successfully) or if the last decoding was unsuccessful (and therefore the decoding of the block of user data was unsuccessful).

Based on this finding, the feedback signal provider can be configured to provide the feedback signal comprising for a generated receive entity an associated feedback code (also designated as acknowledgment signal) indicating if a decoding of the generated receive entity's block of user data was successful. A first value of the associated feedback code corresponds to a successful decoding of the generated receive entity's block of user data and a second value of the associated feedback code corresponds to an unsuccessful decoding of the generated receive entity's block of user data. The first value and the second value can be independent of a current state of the generated receive entity. Hence, in a very efficient embodiment of the present invention, the feedback code is a single bit.

According to further embodiments of the present invention a generated receive entity is configured to determine the mutual information I of its associated block of user data based on a receive message block and, if incremental redundancy blocks of the generated receive entity's blocks of user data have already been transmitted to the generated receive entity, also based on these incremental redundancy blocks. Furthermore, the receive entity is configured to compare the determined mutual information with a mutual information threshold and to start the decoding of the generated receive entity's block of the user data, (only) when the determined mutual information exceeds the mutual information threshold. It has been found that the determination of a mutual information of a block of user data can be performed with few calculation efforts which are especially lower than the calculation effort needed for decoding the receive entity's associated block of user data. Hence, by determining the mutual information of a block of user data before decoding the block of user data, a likely unsuccessful decoding of the block of user data can be prevented. Hence, the receive entity does not start the decoding before it receives enough incremental redundancy blocks such that the mutual information exceeds the mutual information threshold and a decoding will likely be successful. According to some embodiments of the present invention, one exception may be made which is, if no further incremental redundancy blocks are available at the transmitter for a given block of user data and the mutual information is still below the mutual information threshold, the receive entity associated to this given block of user data may nevertheless try to decode the given block of user data, even though its mutual information is below the mutual information threshold.

Hence, by determining the mutual information currently transmitted over the lossy channel unpromising decoding attempts in the receiver can be avoided and thereby no resources are wasted due to likely unsuccessful decoding attempts.

The mutual information determined by the receiver may be derived, for example, based on the log likelihood ratio (LLR) of the transmitted bits for a block of user data.

According to further embodiments of the present invention, the generated receive entity is even configured to determine based on the determined mutual information a minimum number of additional incremental redundancy blocks needed for a successful decoding of the generated receive entity's block of user data. The feedback signal provider is configured to provide the feedback signal such that it comprises the number of additional incremental redundancy blocks needed for a successful decoding of the generated receive entity's block of user data. In other words, the receive entity is configured to request the number of additional incremental redundancy blocks needed for the successful decoding of the generated receive entity's block of user data from the transmitter. In this case, the feedback code comprises at least one additional bit to encode the number of additional incremental blocks or to select the number of additional incremental blocks from a set of predefined numbers by indexing.

According to further embodiments of the present invention, the transmit signal provider of the transmitter is configured to, in dependence on the received redundancy information in the received feedback signal, insert the minimum number of incremental redundancy blocks of the block of user data into the transmit signal. In other words, the transmit signal provider is configured to evaluate the redundancy information comprising the feedback signal and to, in dependence on this redundancy information, provide the minimum number of incremental redundancy blocks of the block of user data to the receive entity by inserting this minimum number of incremental redundancy blocks of the block of user data into the transmit signal.

### Short Description of the Figures

Embodiments of the present invention will be described in the following using the accompanying figures, in which:
- Fig. 1a: shows a transmitter according to an embodiment of the present invention;
- Fig. 1b: shows an example for a transmit signal how it can be provided by the transmitter shown in Fig. 1a;
- Fig. 2a: shows a receiver according to an embodiment of the present invention;
- Fig. 2b: shows an example for a feedback signal how it can be provided by the receiver shown in Fig. 2a;
- Fig. 3: shows a communication system comprising the transmitter shown in Fig. 1a and the receiver shown in Fig. 2a;
- Fig. 4a: shows an example showing how a block of user data is encoded into a message block and a plurality of incremental redundancy blocks;
- Fig. 4b: shows a first exemplary implementation of the encoding of a block of user data into a message block and a plurality of incremental redundancy blocks;
- Fig. 4c: shows a second exemplary implementation of the encoding of a block of user data into a message block and a plurality of incremental redundancy blocks;
- Fig. 4d: shows an example of how the transmit signal can be composed by a transmitter according to an embodiment of the present invention,
- Fig. 5a: shows an example of how the feedback signal can be composed by a receiver according to an embodiment of the present invention;
- Fig. 5b: shows an exemplary implementation for the encoding of the feedback signal using two different code rates;
- Fig. 6a: shows a state diagram of a transmit entity of a transmitter according to an embodiment of the present invention;
- Fig. 6b: shows a state diagram of a receive entity of a receiver according to an embodiment of the present invention;
- Fig. 7: shows in a flow diagram the handling of transmit signal errors and unload errors performed by a transmitter and a receiver according to an embodiment of the present invention;
- Fig. 8: shows a flow diagram of a method for transmitting blocks of user data through a channel of variable capacity according to an embodiment of the present invention; and
- Fig. 9: shows a flow diagram of a method for receiving blocks of user data through a channel of variable capacity according to a further embodiment of the present invention.

### Detailed Description of Embodiments of the Present Invention

Before embodiments of the present invention will be described in more detail using the accompanying figures it is to be pointed out that the same or functionally equal elements are provided with the same reference numbers.

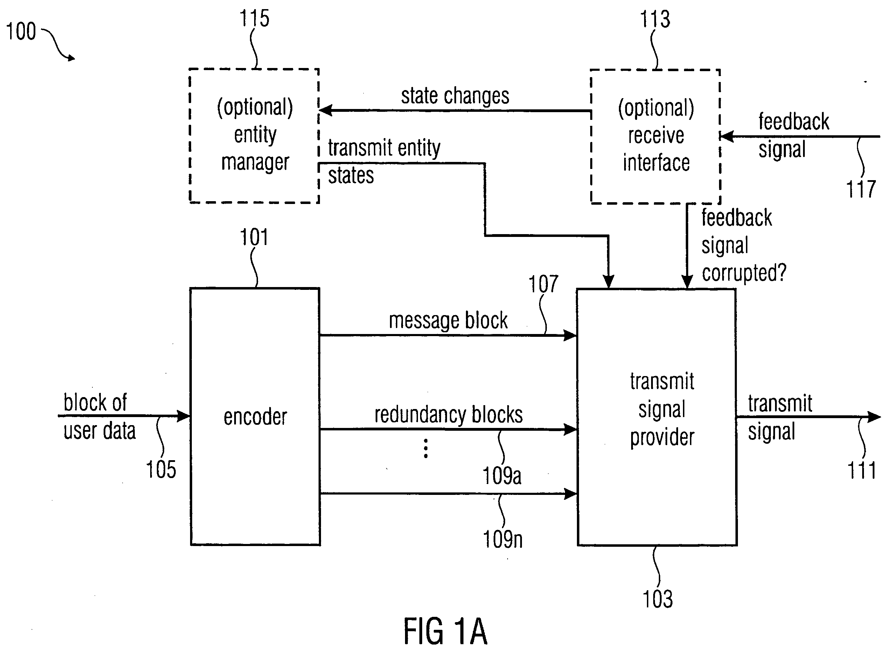

Fig. 1a shows a transmitter 100 according to an embodiment of the present invention. The transmitter 100 is configured to transmit blocks of user data 105 through a channel of variable capacity. In this application, a block of user data can also be referred to as user data and an incremental redundancy block can also be referred to as redundancy block.

The transmitter 100 comprises an encoder 101 and a transmit signal provider 103. The encoder 101 is configured to encode each block of user data 105 into a message block 107 and a plurality of (incremental) redundancy blocks 109a to 109n.

The transmit signal provider 103 is configured to provide a transmit signal 111 which is to be transmitted through the channel. The transmit signal provider 103 provides the transmit signal 111 such that it comprises at least one of a number of message blocks 107 and a number of incremental redundancy blocks 109a to 109n and signaling information indicating the number of message blocks 107 in the transmit signal 111. The number of message blocks 107 and the number of incremental redundancy blocks 109a to 109n is chosen by the transmit signal provider 103 in dependence on the capacity of the channel through which the transmit signal 111 is to be transmitted.

As already described in the introductory part of this application, by choosing the number of incremental redundancy blocks 109a to 109m and the number of message blocks 107 in the transmit signal 111 depending on the capacity of the channel and by transmitting a signaling information indicating the number of message blocks 107 in the transmit signal 111, an improved concept for the transmission of data through a lossy channel can be achieved.

As the number of message blocks 107 and the number of incremental redundancy blocks 109a to 109m are (only) dependent on the capacity of the channel, the capacity of the channel is fully utilized for low capacities of the channel as well as for high capacities of the channel. Hence, the transmitter 100 varies the amount of user data in the transmit signal 111 in dependence on the capacity of the channel.

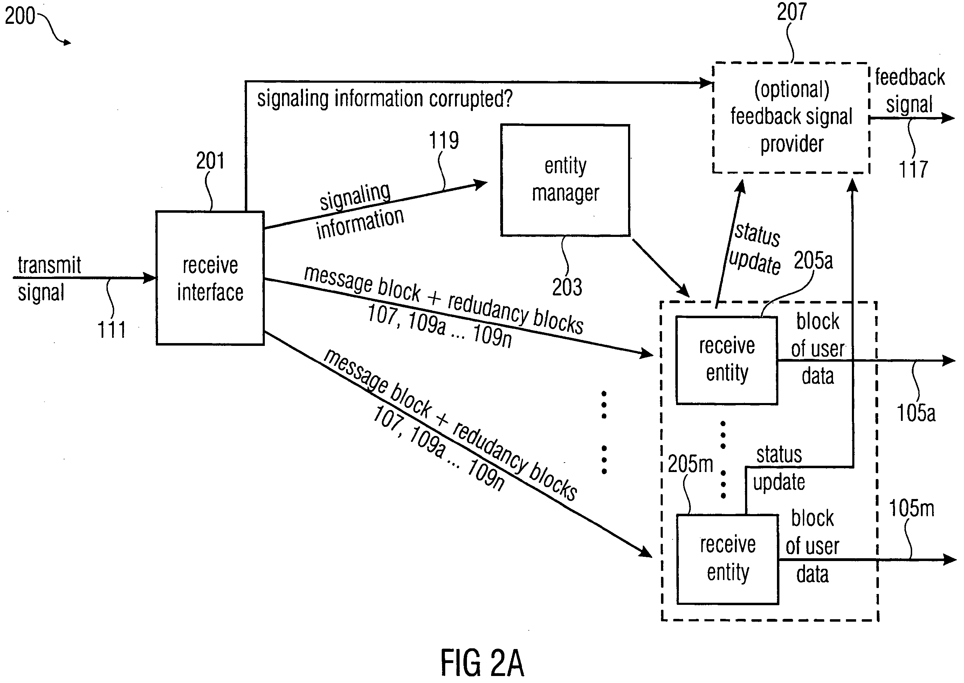

Furthermore, by having the signaling information in the transmit signal 111, which indicates the number of message blocks 107 in the transmit signal 111, a corresponding receiver (such as a receiver 200 shown in Fig. 2a) can determine how many new blocks of user data have to be decoded and can accordingly, as already described, generate per message block in the transmit signal 111 a receive entity which is configured to decode an associated block of user data 105. Hence, by having the signaling information in the transmit signal 111, the receiver receiving the transmit signal 111 is not bounded to a fixed number of receive entities anymore and therefore to a fixed number of at maximum in parallel decodable blocks of user data, as the receiver just generates a new receive entity as a new message block 107 is transmitted in the transmit signal 111 independently of the number of already generated receive entities in the receiver (as far as a maximum number of receive entities is not reached).

Hence, when compared to systems which use a fixed number of such entities in a receiver these entities are typically only fully utilized for a certain capacity of the channel but not for a broad range of different capacities of the channel, as it is enabled with embodiments of the present invention. As an example, assuming a small capacity of the channel a small number of message blocks 107 would be inserted in the transmit signal 111 by the transmit signal provider 103 and therefore also a small number of receive entities would be generated in the receiver. In contrast to this, for a high capacity of the channel, a high number of message blocks 107 would be inserted into the transmit signal 111 by the transmit signal provider 103 and therefore also a high number of receive entities would be generated in the receiver (e.g. which decode the different message blocks 107 of the different blocks of user data 105 in parallel). Hence, for both cases (the low capacity case and the high capacity case) the number of receive entities in the receiver always corresponds to the actual capacity of the channel. In the following, further additional (and optional) features of the transmitter 100 may be described. In other words, the number of entities is approximately proportional to the capacity of the channel. Nevertheless, this mechanism is not a direct one, but an indirect one, as for a low capacity much redundancy has to be transmitted which leads to few space for new entities and therefore to a low number of entities. For a very high capacity, no or few redundancy blocks have to be transmitted, this leads to a maximum number of entities. Here it can be seen, that the number of entities is due to the capacity of the channel.

The transmitter 100 comprises a receive interface 113 and an entity manager 115. The receive interface 113 is configured to receive a feedback signal 117 which indicates changes of states of receive entities in a receiver (such as the receiver 200 shown in Fig. 2a) processing the blocks of user data 105 transmitted (as message blocks 107 and incremental redundancy blocks 109a to 109n) in the transmit signal 111 through the channel.

The entity manager 115 is configured to generate for each block of user data 105, whose message block 107 is inserted into the transmit signal 111 by the transmit signal provider 103, a transmit entity associated to the block of user data 105 and to update a state of the transmit entity in dependence on the received feedback signal 117.

A state of a generated transmit entity indicates if a (and probably even which) redundancy block 109a to 109n of the transmit entity's associated block of user data is to be transmitted. In the present application a transmit entity can be understood as a state machine running through different states wherein the states are updated in dependence on the received feedback signal. As already explained in the introductory part of this application, the advantage of having such transmit entities in the transmitter 100 and of updating the states of these transmit entities in dependence on the received feedback signal 117 is that it can be insured that the transmitter 100 and the receiver 200 are synchronous without the need of exchanging states between the transmitter 100 and the receiver 200.

Furthermore, a state of a transmit entity does not only indicate if a redundancy block of the transmit entity's associated block of user data is to be transmitted, but also indicates which redundancy block of the plurality of redundancy blocks of the transmit entity's associated block of user data is to be transmitted. Hence, the transmit signal provider 103 is configured to, in dependence on a state of a generated transmit entity, insert a chosen incremental redundancy block of the plurality of incremental redundancy blocks of the transmit entity's associated block of user data into the transmit signal 111. In other words, it is not necessary for the receiver 200 providing the feedback signal 117 to indicate which incremental redundancy block of a block of user data is to be transmitted next, as it is already known in the transmitter 100 based on the state of the transmit entity associated to this block of user data. Furthermore, the entity generator 115 is configured to delete (or destroy) a generated transmit entity if a state of the generated transmit entity indicates a finished processing of the generated transmit entity's associated block of user data by a receive entity associated to this block of user data. By deleting or destroying transmit entities whose associated blocks of user data have been processed by the receiver, the number of transmit entities and accordingly the number of receive entities can be kept as small as possible.

In other words, a transmit entity starts to "live" with the generation of the message block and the plurality of redundancy blocks of its associated block user data and "dies" with a finished processing of its associated block of user data in the receiver. Again, the indication that a receive entity has finished the processing of its associated block of user data is indicated in the feedback signal 117 by indicating of a change of state of the receive entity associated to the block of user data with no additional code word needed in the feedback signal 117.

Furthermore, the transmit signal provider 103 is configured to determine, in dependence on the capacity of the channel, a maximum size of the transmit signal 111. It is to be pointed out the maximum size of the transmit signal 111 is highly dependent on the capacity of the channel. As an example, for a high capacity of the channel a higher number of bits can be transmitted within a predetermined time slot as for a low capacity of the channel. Hence, the transmitter 100 copes with the varying maximum size of the transmit signal 111 in dependence on the capacity of the channel. In detail, the transmit signal provider 103 is configured to provide the transmit signal 111 such that if a sum of the sizes of all incremental redundancy blocks 109a to 109m (of the different blocks of user data 105) together which are to be transmitted is smaller than the maximum size of the transmit signal 111, it inserts all incremental redundancy blocks 109a to 109n which are to be transmitted in the transmit signal 111. Furthermore, the transmit signal provider 103 is configured to fill the remaining space in the transmit signal 111 with at least one message block 107 of at least one further block of user data 105. In other words, if enough space is available in the transmit signal 111, the transmit signal provider 103 inserts for every block of user data whose associated transmit entity's state indicates an incremental redundancy block of the associated block of user data to be transmitted such incremental redundancy block and furthermore fills the remaining space in the transmit signal 111 with (not yet transmitted) message blocks 107 of further blocks of user data 105.

Furthermore, the transmit signal provider 103 is configured to provide the transmit signal 111 such that if a sum of the sizes of all incremental redundancy blocks which are to be transmitted (indicated by the states of the generated transmit entities) and all message blocks 107 which are to be transmitted (e.g. all message blocks available in the transmitter 100) together is smaller than the maximum size of the transmit signal 111, insert all these incremental redundancy blocks 109a to 109n and message blocks 107 to be transmitted in the transmit signal 111. Furthermore, the transmit signal provider 103 is configured to fill the remaining space in the transmit signal 111 with at least a further incremental redundancy block 109a to 109n of a block of user data 105, a message block 107 or another incremental redundancy block 109a to 109n of which is also transmitted in the transmit signal 111. In other words, if the maximum size of the transmit signal 111 is larger than the sum of the sizes of the incremental redundancy blocks 109a to 109n and message blocks 107 to be transmitted, the transmit signal provider 103 fills the transmit signal 111 with further incremental redundancy blocks 109a to 109n which are not requested yet by the receiver (or which may be requested later on). Hence, the transmit signal provider 103 always tries to fill remaining space in the transmit signal 111 with incremental redundancy blocks 109a to 109n, even if these incremental redundancy blocks 109a to 109n have not been requested until now. As an example, if a state of a given transmit entity indicates that the first incremental redundancy block of its associated block of user data is to be transmitted in the transmit signal 111, the transmit signal provider 103 inserts this first incremental redundancy block into the transmit signal 111 and if now, after inserting all other incremental redundancy blocks to be transmitted and all other message blocks to be transmitted in the transmit signal 111 space is still left, the transmit signal provider 103 inserts a second incremental redundancy block of the block of user data associated to the given transmit entity although the transmit entity's state does not yet indicate the request for this second incremental redundancy block. Hence, the transmit signal 111 comprises the first incremental redundancy block of the given transmit entity's associated block of user data and the second incremental redundancy block of the given transmit entity's associated block of user data. By transmitting this second incremental redundancy block to the receiver without knowing if it is going to be needed at the receiver side, it can be prevented that this second incremental redundancy block needs to be transmitted in a further transmission cycle, for example in which the capacity of the channel is lower than in the current transmission cycle. Hence, the transmit signal provider 103 always tries to fully utilize the available space in the transmit signal 111 such that no available space in the transmit signal 111 is wasted.

In other words, the transmit signal provider 103 passes through a list of transmit entities and includes for each transmit entity the incremental redundancy block of its associated block of user data indicated by the state of the transmit entity and if the end of the list is reached during this loading of the transmit signal 111 and there is still space left in the transmit signal 111 the transmit signal provider 103 inserts message blocks 107 into the transmit signal 111 (thereby generating new transmit entities) and if after inserting the message blocks 107 into the transmit signal 111 space is still left in the transmit signal 111, the transmit signal provider 103 passes the list of transmit entities again and inserts further incremental redundancy blocks 109a to 109n into the transmit signal 111. This process is cyclically repeated until the maximum size of the transmit signal 111 is reached or all code words in the list have been completely "loaded". The latter may occur when a data source providing the blocks of user data 105 provides no further blocks of user data 105 for a longer time period or the end of transmission is reached.

Furthermore, the transmit signal provider 103 is configured to provide the transmit signal 111 such that the signaling information comprised in the transmit signal 111 further indicates if the last feedback signal 117 received by the receive interface 113 is corrupted.

As an example, the receive interface 113 can be configured to perform an error check on the feedback signal 117 to determine if the feedback signal 117 is corrupted. Such an error check may be, for example, a cyclic redundancy check performed on the feedback signal 117. If this cyclic redundancy check fails, the transmit signal provider 103 indicates this in the signaling information transmitted in the transmit signal 111 to the receiver.

Furthermore, the transmitter 100 is configured to, if the last feedback signal 117 was corrupted, compare the last feedback signal 117 with a given bit pattern. This given bit pattern can be inserted by the receiver into the feedback signal 117 to signal the transmitter 100 that the last transmit signal 111 (or in more detail the signaling information in the last transmit signal 111) sent to the receiver was corrupted. Hence, in the present application a corrupted transmit signal 111 can be understood as a transmit signal in which the signaling information is corrupted e.g. the signaling information cannot be decoded by the receiver 200 (due to a wrong CRC) or in the very few cases in which the signaling information seems to be decodable (as the CRC of the signaling information seems to be right but actually is wrong) but does not fit to the rest of the transmit signal 111 (the latter case will be described later on as an unload error). Such a signaling information error can be designated as HCHSIGERR. The entity manager 115 is configured to, if a given similarity threshold between the last feedback signal 117 and the given bit pattern is not exceeded, update the state of each generated transmit entity independent of a signaling information in the last feedback signal 117 such that for each generated transmit entity an incremental redundancy block 109a to 109n of the generated transmit entity's associated block of user data 105 is to be transmitted, if not all incremental redundancy blocks of the generated transmit entity's associated block of user data 105 were already transmitted in the transmit signal 111 to the receiver. Hence, if the given bit pattern is likely to not be comprised in the feedback signal 117, the transmitter 100 assumes that the last transmit signal 111 transmitted to the receiver was not corrupted, but assumes that the received feedback signal 117 was corrupted.

Furthermore, as the feedback signal 117 was corrupted, the transmitter 100 assumes that each receive entity in the receiver needs an incremental redundancy block 109a to 109n of its associated block of user data. Hence, the entity manager 115 updates the state of the generated transmit entities accordingly. To guarantee that the receive entities in the receiver and the generated transmit entities in transmitter 100 are synchronous, the signaling information in the transmit signal 111 is used which indicates that the last feedback signal 117 was corrupted. Hence, if the receiver receives the transmit signal 111 having the signal information indicating that the last feedback signal 117 was corrupted, the receiver knows that it receives incremental redundancy block 109a to 109n for each of its generated receive entities (which did not already receive all incremental redundancy blocks 109a to 109n of its associated block of user data 105) independently if the receive entity requested a further incremental redundancy block 109a to 109n in the last feedback signal 117 or not.

Furthermore, the entity manager 115 is configured to, if the given similarity threshold between the last feedback signal 117 and the given bit pattern is exceeded, reset the state of each generated transmit entity to an initial state, such that for each generated transmit entity the message block 107 of the transmit entity's associated block of user data 105 is to be transmitted (anew). In other words, if the feedback signal 117 indicates that the last transmit signal 111 (or in more detail the signaling information in the last transmit signal 111) transmitted to the receiver was corrupted, the entity manager 115 resets the states of the generated transmit entities and starts the transmission of the not already completely processed blocks of user data 105 in the receiver anew.

Furthermore, the receive interface 113 can be configured to decode the feedback signal 117 with a plurality of given different code rates, and if for none of the given different code rates a decoding of the feedback signal was successful to define the feedback signal 117 corrupted. The decoding of the feedback signal 117 with different code rates is useful if the receiver uses different code rates for transmitting the feedback signal 117. As an example, the transmitter (or in more detail the receive interface 113) decodes the feedback signal 117 with all defined code rates and decides with the help of the CRC code of the feedback signal 117 which code rate exists. The selection of the code rate can be performed in the receiver in dependence on the number of feedback codes in the feedback signal 117 and the transmission statistic in the return channel. As an example, at first the code rate can be reduced until the number of redundant feedback codes in the feedback signal 117 becomes minimal. For a bad transmission statistic, i.e. with frequent CRC errors in the return channel, the code rate can be reduced further by the receiver. As the transmission 100 does not know which code rate is currently used by the receiver for coding the feedback signal 117, the receive interface 113 decodes the feedback signal 117 with the plurality of given different code rates and (only) if for none of the different code rates the decoding of the feedback signal 117 was successful, defines the feedback signal 117 as being corrupted.

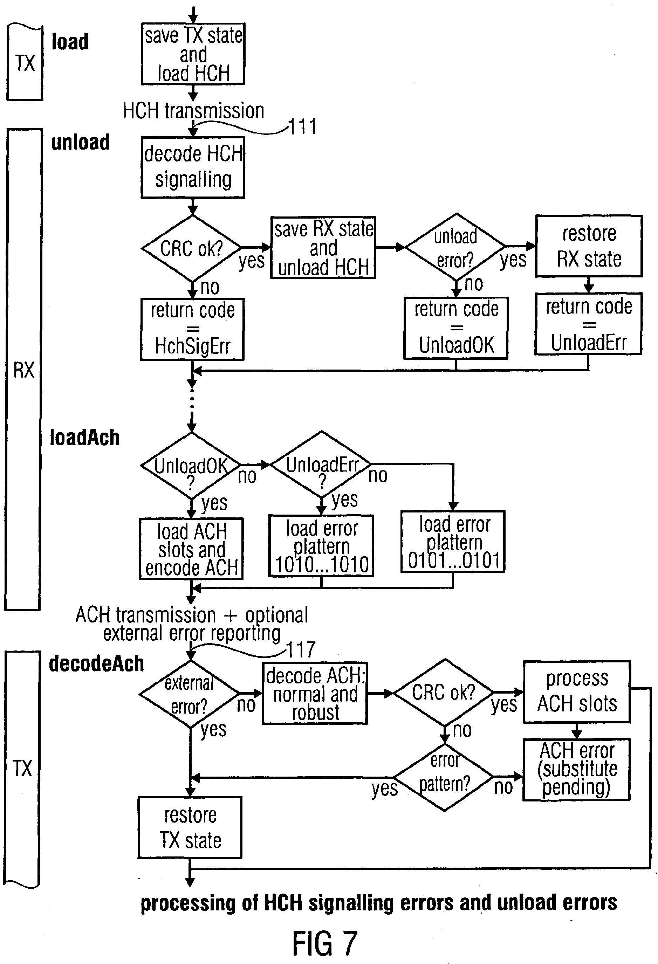

The error handling mechanism described above will be described in more detail using Fig. 7 later on.

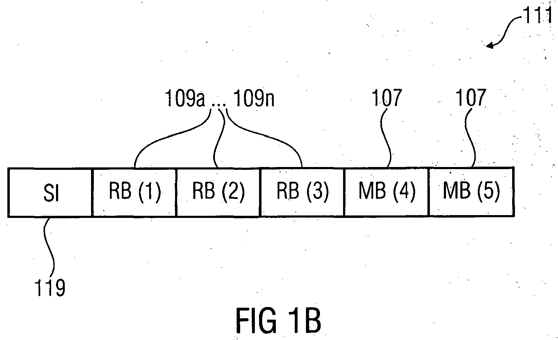

Fig. 1b shows an example for the transmit signal 111 and how it can be provided by the transmit signal provider 103. As can be seen in Fig. 1b, the transmit signal 111 comprises the signaling information 119 (SI) and redundancy blocks 109a to 109n (RB(1), RB(2), RB(3)) and message blocks 107 (MB(4), MB(5)). The number in brackets behind the RB or MB designates the number for the block of user data 105 to which the respective incremental redundancy block 109a to 109n or message block 107 belongs to. As can be seen, the redundancy blocks 109a to 109n comprised in the transmit signal 111 belong to different blocks of user data 105 and are therefore transmitted to different receive entities in the receiver processing these different blocks of user data. Furthermore, two message blocks 107 are transmitted in the transmit signal 111 which lead, upon receipt of the transmit signal 111 at the receiver, to a generation of a fourth receive entity and a fifth receive entity in the receiver, each receive entity being configured to decode an associated block of user data 105. The number of message blocks 107 comprised in the transmit signal 111 (in the example shown in Fig. 1b two) is signaled in the signaling information 119. Furthermore, as already described the signaling information 119 can indicate if the last feedback signal 117 received by the transmitter 100 was corrupted or not.

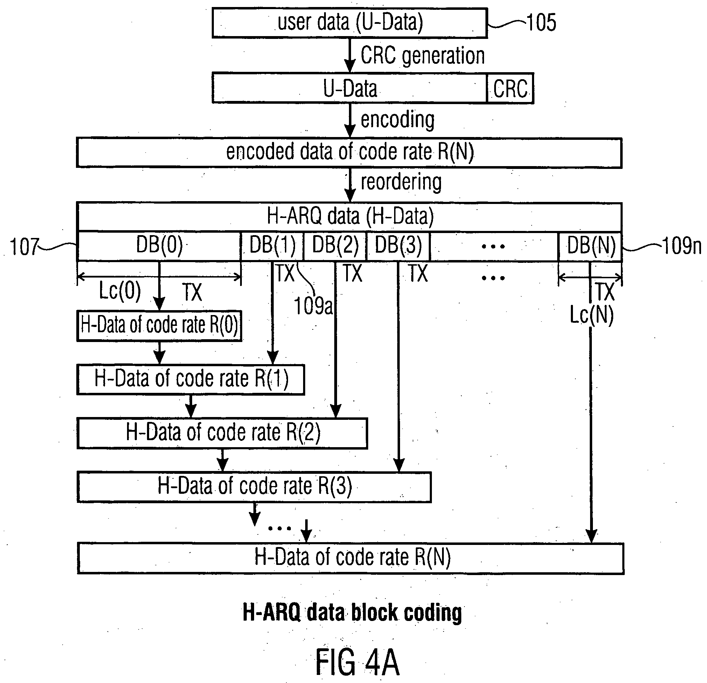

Furthermore, as can be seen from Fig. 1b, the transmit signal provider 103 is configured to provide the transmit signal 111 such that message blocks 107 or incremental redundancy blocks 109a to 109n of different blocks of user data 105 are arranged subsequent in the transmit signal 111 with no further header information in between. The further header information is not necessary, as the transmit signal provider 103 inserts the incremental redundancy blocks 109a to 109n and the message blocks 107 in a predetermined order (based on the list of generated transmit entities in the entity manager 115). As the number of message blocks in the transmit signal 111 is signaled in the signaling information 119, the receiver receiving the transmit signal 111 is capable of generating the same list for its generated receive entities and therefore knows the order in which the transmit signal provider 103 inserts the incremental redundancy blocks 109a to 109n and message blocks 107 into the transmit signal 111. Therefore, the receiver can decode the transmit signal 111 without the need of additional header information between two subsequent incremental redundancy blocks 109a to 109n or message blocks 107. A more detailed example for the transmit signal 111 and the generation of the incremental redundancy blocks 109a to 109n and the message block 107 will be given in conjunction with Figs. 4a to 4d later on.

Fig. 2a shows a receiver 200 according to an embodiment of the present invention. The receiver 200 is configured to receive blocks of user data 105 through a channel of variable capacity. Each block of user data 105 is encoded into a message block 107 and a plurality of incremental redundancy blocks 109a to 109n. As an example, the receiver 200 is capable of communicating with the transmitter 100 shown in Fig. 1a.

The receiver 200 comprises a receive interface 201 and an entity manager 203. The receive interface 201 is configured to receive a transmit signal 111 through the channel. The transmit signal 111 comprises at least one of a number of message blocks 107 and a number of incremental redundancy blocks 109a to 109n depending on the capacity of the channel. Furthermore, the transmit signal 111 comprises signaling information 119 indicating the number of message blocks 107 in the transmit signal 111.

The entity manager 203 is configured to generate, in dependence on the number of message blocks 107 indicated by the signaling information 119, a number of receive entities 205a to 205m, wherein each receive entity 205a to 205m is configured to decode an associated block of user data 105a to 105m. A receive entity 205a to 205m can also be regarded as a process or thread for decoding a single block of user data 105. A plurality of such receive entities 205a to 205m can run in parallel in the receiver 200 wherein each receive entity 205a to 205m decodes a single block of user data 105a to 105m.

As already described in the introductory part of this application and in conjunction with the transmitter 100, it is an advantage of the embodiments of the present invention that a communication system comprising the transmitter 100 and the receiver 200 can adapt very quickly to a change in capacity of the communication channel between the transmitter 100 and the receiver 200. Hence, it can be ensured that the maximum available capacity of the channel is always used for transmitting blocks of user data 105a to 105m through the channel. This is achieved in the receiver 200 by means of the entity manager 203 which generates in dependence on the number of message blocks 107 in the transmit signal 111a number of receive entities 205a to 205m wherein each receive entity 205a to 205m is configured to decode an associated block of user data 105a to 105m. These receive entities 205a to 205m can be configured to decode their associated blocks of user data 105a to 105m in parallel, which enables a data throughput which is as high as possible. It is to be pointed out that the number of receive entities 205a to 205m in the receiver 200 is not fixed but is highly variable and depends (only, except of a resource limitation) on the number of message blocks 107 and further on the number of blocks of user data 105a to 105m which are currently decoded in the decoder 200.

Hence, for a high capacity of the channel a maximum data throughput can be achieved since no bottleneck is created in the receiver 200 because of a limited number of receive entities 205a to 205m, and furthermore in the case of a low capacity of the channel resources may be saved, as no unnecessary receive entities (which do not have blocks of user data to process) are generated by the entity manager 203.

Hence, by having the variable number of receive entities 205a to 205m a more efficient receiver 200 can be provided when compared to systems having a fixed number of processing units for processing blocks of user data.

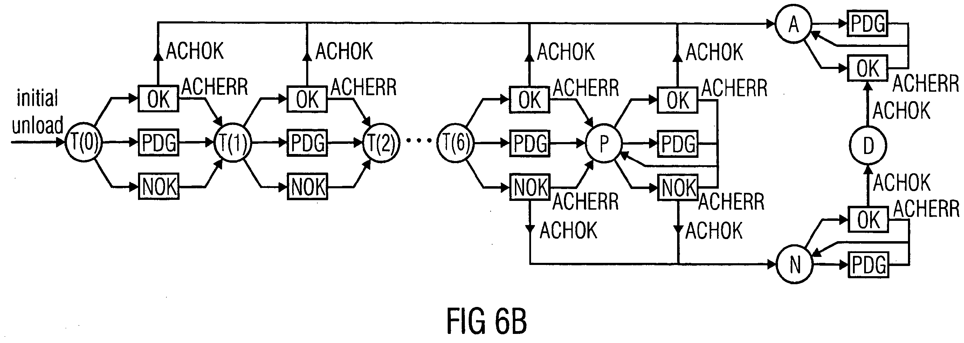

Each generated receive entity 205a to 205m is configured to start decoding its associated block of user data 105a to 105m by decoding a message block 107 of the generated receive entity's associated block of user data 105a to 105m and to, upon an unsuccessful or successful decoding of the message block 107, update a state of the generated receive entity 205a to 205m. An example for these state updates in the receive entities 205a to 205m will be given in conjunction with Fig. 6b later on.

Furthermore, each of the receive entities 205a to 205m is configured to, upon reception of at least one incremental redundancy block 109a to 109n of the generated receive entity's associated block of user data 105a to 105m, combine the at least one incremental redundancy block 109a to 109n with the message block 107 of the generated receive entity's associated block of user data 105a to 105m to derive a combined block. Furthermore, each receive entity 205a to 205m is configured to decode the resulting combined block and upon an unsuccessful or successful decoding of this combined block update its state. As each incremental redundancy block 109a to 109n of a block of user data 105a comprises a incremental redundancy of its block of user data 105a to 105m, the probability of a successful decoding of the block of user data 105a to 105m by the associated receive entity 205a to 205m increases with every additional incremental redundancy block 109a to 109n with the drawback of a decreasing code rate for the block of user data 105a to 105m.

According to further embodiments of the present invention each generated receive entity 205a to 205m is configured to determine the mutual information I of its associated block of user data 105a to 105m based on the received message block 107 and, if incremental redundancy blocks 109a to 109n of the generated receive entity's blocks of user data 105a to 105m have already been transmitted to the generated receive entity 205a to 205m, also based on these incremental redundancy blocks 109a to 109n. Furthermore, each receive entity 205a to 205m is configured to compare the determined mutual information with a given mutual information threshold and to start the decoding of the generated receive entity's block of user data 105a to 105m if the determined mutual information exceeds the mutual information threshold. By determining the mutual information in the receive entities 250a to 205m it can be achieved that only those code words (blocks of user data 105a to 105m) are decoded for which a successful decoding is likely, thereby the number of necessary decoding processes is significantly reduced.

In other words, each receive entity 205a to 205m starts a decoding of its block of user data 105a to 105m (e.g. by decoding the message block 107 or a combined block of its associated block of user data 105a to 105m) if the mutual information of its associated block of user data 105a to 105m exceeds the mutual information threshold. Nevertheless, for the case in which all incremental redundancy blocks 109a to 109n of the block of user data 105a to 105m were already transmitted to the associated receive entity 205a to 205m and the mutual information of this block of user data 105a to 105m is still below the mutual information threshold, the receive entity 205a to 205m nevertheless can be configured to start the decoding of the block of user data 105a to 105m although an unsuccessful decoding of the block of user data 105a to 105m is likely.

Furthermore, the receiver 200 comprises a feedback signal provider 207. The feedback signal provider 207 is configured to provide the feedback signal 117, and comprises for each generated receive entity 205a to 205m an associated feedback code or acknowledgement signal indicating if a decoding of the generated receive entity's block of user data 105a to 105m was successful or not. A first value of the associated feedback code corresponds to a successful decoding of the receive entity's associated block of user data 105a to 105m and a second value of the associated feedback code corresponds to an unsuccessful decoding of the generated receive entity's block of user data 105a to 105m. It is to be pointed out that the first value and the second value can be chosen to be independent of the current state of the generated receive entity 205a to 205m. In other words, the feedback signal 117 does not comprise the precise state of a receive entity 205a to 205m but only an indication that a state update of the receive entity 205a to 205m happened. Hence, in a very easy embodiment of the present invention, it is sufficient to provide the associated feedback code for a receive entity 205a to 205m as a single bit, wherein a first bit value corresponds to a successful decoding and a second bit value corresponds to an unsuccessful decoding of the generated receive entity's associated block of user data 105a to 105m.

Furthermore, the feedback signal provider 207 can be configured to choose the code rate of the feedback signal 117 in dependence on the capacity of the channel, as already described above.

As an example, the feedback signal provider 207 can be configured to provide, for a chosen code rate of the feedback signal 117, the feedback signal 117 by inserting into the feedback signal 117 for each generated receive entity 205a to 205m, an associated feedback code indicating if the decoding of the generated receive entity's block of user data 105a to 105m was successful. The feedback signal provider 207 can be configured to insert these associated feedback codes until a maximum capacity of the feedback signal 117 for the chosen cote rate is reached or until the feedback signal 117 comprises for each generated receive entity 205a to 205m an associated feedback code.

Cases may exist in which the capacity of the feedback signal 117 is smaller than needed for all feedback codes. In this case, the feedback signal provider 207 inserts as many feedback codes as possible into the feedback signal 117 until the maximum capacity of the feedback signal 117 is reached. The remaining feedback codes are in this case not transmitted to the transmitter 100. If the transmitter 100 does not receive a feedback code for a given receive entity 205a to 205m, the transmitter 100 assumes that the given receive entity 205a to 205m requests an incremental redundancy block 109a to 109n of its associated block of user data 105a to 105m. Hence, the acknowledgement signals or feedback codes are combined to a block of the feedback signal 117. This block can be provided with a CRC code and is encoded with a given channel code. Since the length of the feedback signal 117 in the return channel is predetermined (and dependent on the capacity of the channel and therefore dependent on the code rate), the number of feedback codes is selected such that the length of the block of feedback codes utilizes the available length for the feedback signal 117 as best as possible. The selection of the code rate in the feedback signal provider 207 is made based on the number of required feedback codes in the feedback signal 117 and based on the transmission statistic in the return channel. At first, the code rate of the feedback signal 117 is reduced until the number of feedback codes utilized the available capacity in the feedback signal 117 as best as possible. With a bad transmission statistic, i.e. with frequent CRC errors in the return channel, the code rate is reduced further, which can then lead to the case that the feedback signal 117 does not comprise a feedback code for every generated receive entity 205a to 205m in the receiver 200.

Furthermore, each generated receive entity 205a to 205m can be configured to determine based on the determined mutual information a minimum number of additional incremental redundancy blocks needed for a successful decoding of the generated receive entity's block of user data 105a to 105m. The feedback signal provider 207 can be configured to provide the feedback signal 117 such that it comprises for a receive entity 205a to 205m a redundancy information indicating this number of additional incremental redundancy blocks needed for a successful decoding of the generated receive entity's block of user data 105a to 105m. In this case, the feedback code comprises more than one Bit and is used for indicating the number of requested redundancy blocks or an index from a plurality of predefined values indicating the number of requested redundancy blocks. In other words, the feedback signal 117 can be used for signaling for a generated receive entity 205a to 205m the number of incremental redundancy blocks of its associated block of user data 105a to 105m which are needed in the receive entity 205a to 205m such that the mutual information of the generated receive entity's block of user data 105a to 105m exceeds the mutual information threshold and the receive entity 205a to 205m can start decoding its associated block of user data 105a to 105m.

Accordingly, the transmit signal provider 103 of the transmitter 100 can be configured to, in dependence on the received redundancy information, insert the (requested) minimum number of incremental redundancy blocks of the receive entity's associated block of user data 105a to 105m into the transmit signal 111. In other words, the receiver 200 is not only capable of requesting per generated receive entity 205a to 205m a single (further) incremental redundancy block 109a to 109n but also a plurality of incremental redundancy blocks 109a to 109n. Furthermore, the transmitter 100 is not only capable of transmitting per block of user data 105a to 105m a single incremental redundancy block 109a to 109n of this block of user data 105a to 105m, but also a plurality of incremental redundancy blocks 109a to 109n of the block of user data 105a to 105m in dependence on the redundancy information provided by the receive entity 205a to 205m processing the block of user data 105a to 105m in the receiver 200.

As already described in conjunction with the transmitter 100, the transmitter 100 and the receiver 200 can be configured to perform an error handling, for example if the signaling information in the transmit signal 111 was corrupted and/or if the feedback signal 117 was corrupted.

Hence, the feedback signal provider 207 can be configured to provide the feedback signal 117 such that it comprises at least one error correction bit which can be used at the transmitter 100 for an error correction check of the feedback signal 117. As an example, the feedback signal 117 can comprise a CRC code which can be verified by the transmitter 100. Furthermore, the feedback signal provider 207 can be configured to signal the transmitter 100 that the last the signaling information received from the transmitter 100 was corrupted. This is performed by the feedback signal provider 207 in that it, if the received the signaling information was corrupted, provides the feedback signal 117 such that the feedback signal 117 comprises a given bit pattern which is independent of the states of the generated receive entities 205a to 205m. This given bit pattern is chosen such that the error correction check of the feedback signal 117 performed at the transmitter 100 receiving the feedback signal 117 fails. As already described, if the transmitter 100 detects this given bit pattern in the feedback signal 117, it can perform a certain error handling routine which leads to a reset of the transmit entities of the transmitter 100.

Furthermore, the entity manager 203 can be configured to, if the signaling information is corrupted, reset the generated receive entities 205a to 205m to an initial state such that each generated receive entity 205a to 205m waits for a message block 107 of the generated receive entity's block of user data 105a to 105m to be received anew. In other words, if the signaling information was corrupted, the receiver 200 signals this inside the feedback signal 117 to the transmitter 100 which then leads to a reset of the transmit entities in the transmitter 100 and the receive entities 205a to 205m in the receiver 200. Hence, even in the case of a corrupted the signaling information, the transmitter 100 and the receiver 200 stay synchronous. Furthermore, an error handling for a corrupted feedback signal 117 can be implemented too. Such error handling functionality will be described later on in conjunction with Fig. 7.

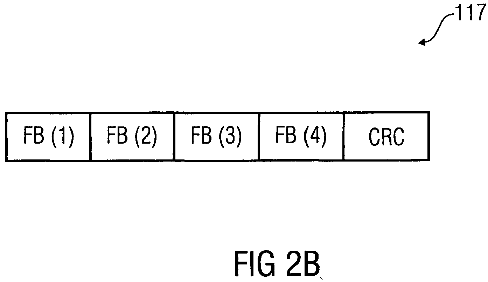

Fig. 2b shows an example for the feedback signal 117 which comprises a plurality of feedback codes for different receive entities 205a to 205m and a CRC code.

As already described, the length of this feedback signal 117 is variable and depends on the capacity of the channel and furthermore on the chosen code rate of the feedback signal 117.

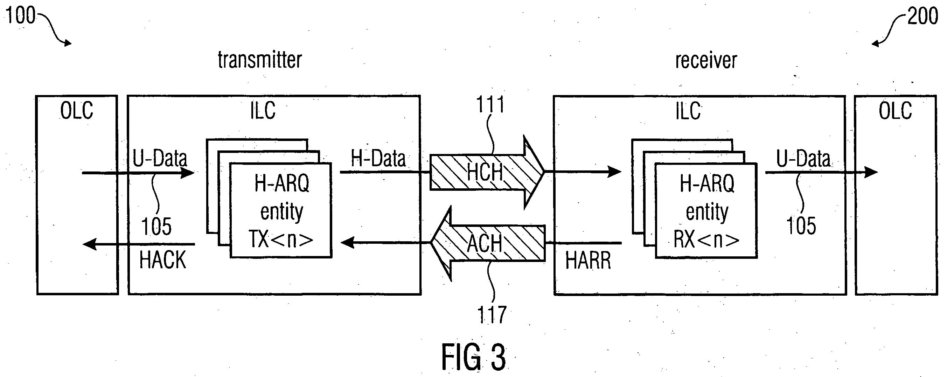

In the following a detailed implementation for a communication system according to an embodiment of the present invention is given. Such a communication system is shown in Fig. 3. This communication system comprises the transmitter 100 and the receiver 200. Although several features of the communication system are described in conjunction with the following example, it is to be understood that further embodiments of the present invention miss some of these optional additional features described in the following.

The communication system described in the following uses a so called Hybrid-ARQ type II scheme and uses the retransmission of incremental redundancy data.

The H-ARQ operation is controlled by a queue of H-ARQ entities (the transmit entities in the transmitter 100 and the receive entities 205a to 205m in the receiver 200), the so called H-queue. Each entity in the H-queue represents a stop and wait H-ARQ type II process that manages the transmission of a single code word (or block of user data 105). Due to the type II operation, the transmission of a codeword starts with an initial transmission conveying the user data and a small amount of redundancy (comprised in the message block 107), followed by further transmissions that provide incremental redundancy (the incremental redundancy blocks 109a to 109n), if required. A receive entity 205a to 205m finishes with an acknowledgement (ACK) if its associated code word has been decoded successfully or a NAK (not acknowledged) if the available incremental redundancy has been transmitted and no successful decoding of the associated code word has been achieved.

Fig. 3 shows the logical channels and the signals involved in the H-ARQ operation.

If there is free transmission capacity available at the transmitter 100, a new transmit entity TX(n) is created loaded with user data U-Data (with a block of user data 105). The transmit entity performs encoding of the user data (to derive the message block 107 and the plurality of incremental redundancy blocks 109a to 109n) and transmits the encoded data to the receiver 100 via the forward channel H (in the transmit signal 111). As already described, the encoded data are partitioned into a data block for initial transmission (a message block 107) and a certain number of data blocks with incremental redundancy (the plurality of incremental redundancy blocks 109a to 109n) for subsequent transmissions. With the initial transmission a corresponding receive entity 205a to 205m (RX(n)) is created at the receiver 200. The receive entity 205a to 205m performs decoding and signals the result via the feedback signal 117 (ACK or request incremental redundancy), that is transmitted via the acknowledge channel or return channel A. The feedback signal 117 can also be designated as HARR (H-ARQ redundancy request). If the decoding is successful the receive entity 205a to 205m passes the user data U-data (its associated block of user data 105a to 105m) to the outer link control (OLC) at the receiver 200 and the transmit entity associated to this block of user data 105 signals ACK via an HACK (H-ARQ acknowledge) signal to the outer link control at the transmitter 100. Afterwards both entities (the transmit entity in the transmitter 100 and the receive entities 205a to 205m in the receiver 200) are destroyed. If the decoding in the receive entity 205a to 205m fails a redundancy request (HARR) is signaled via the feedback signal 117 and the transmitter 100 transmits incremental redundancy. If the available incremental redundancy of a block of user data 105 has been fully transmitted and no successful decoding has been achieved, no user data is passed to the outer link control at the receiver 200 and an NAK is signaled via the HACK signal to the outer link control at the transmitter 100. Afterwards both entities (the transmit entity and the receive entity 205a to 205m associated to the unsuccessfully decoded block of user data 105a to 105m) are destroyed. In this case, the outer link control at the transmitter 100 may now initiate a retransmission of this block of user data, thereby creating a new transmit entity in the inter link control (ILC) of the transmitter 100.

Fig. 4a illustrates the processing of the blocks of user data 105 at the transmitter 100 and the transmission of the encoded data. It can be seen that a CRC code is added to the block of user data. Afterwards the block of user data is encoded to receive a block of encoded data of a given code rate R(N). This block is reordered to derive the message block 107 and the plurality of redundancy blocks 109a to 109n of the block of user data. In other words, after the CRC generation with a given polynomial, the data is encoded with the code rate R(N), which is a minimum code rate. The encoded data is reordered and partitioned into (M + 1) data blocks DB(0), ..., DB(N). The initial transmission comprises the data block DB(0) which is the message block 107, thereby providing encoded data of the maximum code rate R(0). If required the incremental redundancy blocks 109a to 109n (DB(1), ..., DB(N)) are transmitted which provide incremental redundancy of m = 1, ..., M for the code rates R(1), ..., R(N) with R(0) > ... >R(N).

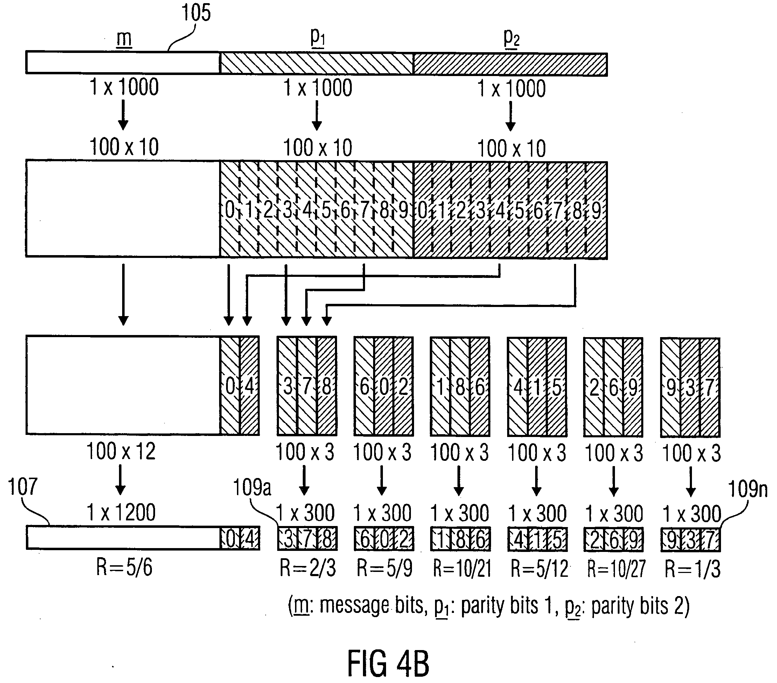

Fig. 4b shows an exemplary implementation on how the encoded block of user data comprising message bits m, parity bits p₁, p₂ can be reordered to derive the message block 107 of a block of user data and the plurality of incremental redundancy blocks 109a to 109n. It can be seen that with every transmitted incremental redundancy block 109a to 109n the code rate of the block of user data decreases to a minimum code rate of, in this example, R = 1/3. In the example shown in Fig. 4b, the length of the message block 107 and the incremental redundancy blocks 109a to 109n is always a multiple of 300 bits in order to comply with the partitioning of the turbo encoded messages.

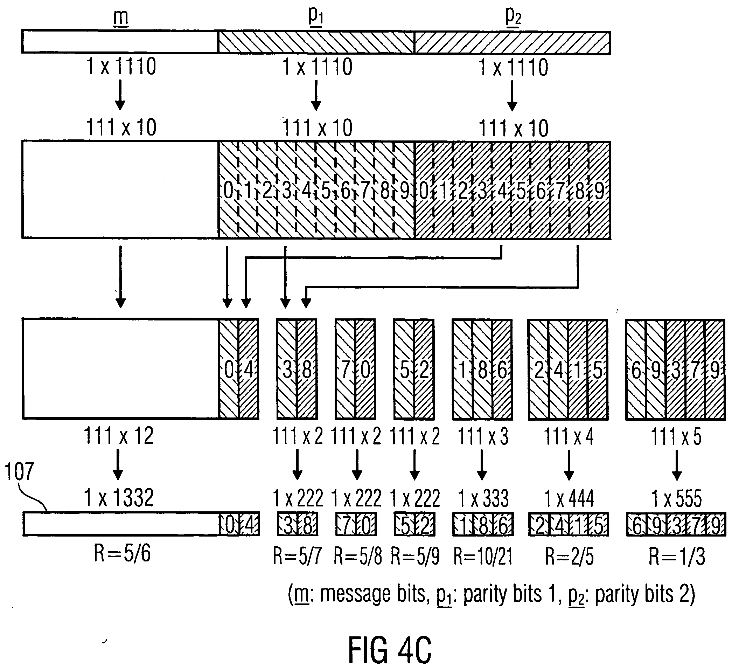

Nevertheless, according to embodiments of the present invention, the coupling of the physical data frame length (of the message block 107 and the incremental redundancy blocks 109a to 109n) and the partitioning of the turbo encoded messages can be completely eliminated by using partial transmissions, i.e. by filling up each physical data frame (each transmit signal 111) with partial data from a single transmit entity transmitting the remaining data at the beginning of the next transmit signal 111. As a consequence, the length of the transmit signal 111 may change at any time - for example by changing the modulation scheme - without affecting HARQ-2 operation. This feature has been exploited to optimize the length of the incremental redundancy transmissions (of the incremental redundancy blocks 109a to 109n) as is shown in Fig. 4c.

Hence, from Fig. 4c it can be seen that different incremental redundancy blocks 109a to 109n of a block of user data 105 have different length, as the length of the incremental redundancy blocks 109a to 109n and of the message block 107 is not coupled anymore to the length of the transmit signal 111.

To summarize, blocks of user data 105 with binary payload data of a predetermined length are transmitted between the transmitter 100 and the receiver 200.

The blocks of user data 105 are provided with a cyclic redundancy check code for error recognition as shown in Fig. 4a.

The blocks of user data 105 including the CRC are encoded with a binary channel code having a low code rate which leads to the encoded data of code rate R(M). The length Lc of the resulting binary code words (of the message block 107 and the incremental redundancy blocks 109a to 109n) results from the length of the binary payload data (from the length of the blocks of user data 105), the length of the CRC code and the code rate R of the channel code.

The code words (the blocks of user data 105) are transmitted with a Hybrid ARQ type II method (HARQ); therefore, every block of user data of the length Lc is divided into a portion of the length Lc(0) for a first transmission (the message block 107) and N portions (the incremental redundancy blocks 109a to 109n) of the length Lc(1), ..., Lc(N) for subsequent transmissions. The division is made by successively puncturing the bits of the blocks of user data 105 until a predetermined maximum code rate Rmax > R is obtained. The non-punctured bits form the portion for first transmission (the message block 107). The punctured bits are distributed to the portions for the subsequent transmissions (to the incremental redundancy blocks 109a to 109n); thereby, it is useful to perform a distribution such that the lengths Lc(1), ..., Lc(N) form a monotonously rising sequence.

According to the mode of operation of a Hybrid ARQ type II method, for a block of user data 105, first, the message block 107 is transmitted with the maximum code rate R(0) = Rmax. If the receiver 200 is not able to successfully decode this message block 107 (this first transmission), i.e. the examination of the CRC in the receiver 200 fails, the incremental redundancy block 109a to 109n of this block of user data 105 may be successively transmitted until the receiver 200 signals a successful decoding of the block of user data 105. With every further subsequent transmission of an incremental redundancy block 109a to 109n, the code rate of the block of user data 105 is reduced and reaches, in the case of transmission of all portions, the code rate R of the used channel code. The following applies: Rmax = R(0) > R(1) > ... >R(N) = R.

When all portions or blocks of a block of user data 105 are transmitted without being able to obtain a successful decoding, the bits of the block of user data 105 can optionally, within further subsequent transmissions (N + 1, N + 2, ...), be transmitted again and combined with the already transmitted bits in the receiver; for this, division of the code word into portions also takes place, which will be successively transmitted. With this option, the effective code rate is reduced further and is close to zero. Alternatively, the receiver 200 can signal to the transmitter 100 that the decoding of the block of user data 105 completely failed and the transmitter 100 can start a retransmission of the block of user data 105 beginning with its message block 107.

The transmission of a block of user data 105 ends when the receiver 200 signals a successful decoding or a predetermined maximum number of subsequent transmissions (of the incremental redundancy blocks 109a to 109n) is reached. Without the option of further subsequent transmission, the transmission of a block of user data 105 ends after N subsequent transmissions (after all incremental redundancy blocks 109a to 109n of the block of user data 105 have been transmitted) the latest.

The transmission between the transmitter 100 and the receiver 200 is performed over a bidirectional transport channel, over which in the forward channel HCH binary blocks (transmit signals 111) of the length Lh are transmitted from the transmitter 100 to the receiver 200 and in the return channel ACH binary blocks (feedback signals 117) of the length La are transmitted from the receiver 200 to the transmitter 100. The transmission between the transmitter 100 and the receiver 200 is performed logically or physically intermittently:

HCH(1) - ACH(1) - HCH(2) - ACH(2)

etc.

The length Lh of the transmit signal 111 and the length La of the feedback signal 117 can be constant or variable. For the latter it is to be ensured that the respectively current lengths Lh and La are known in the transmitter 100 and in the receiver 200. In practice, the lengths Lh and La usually always change when the parameters of the bidirectional transport channel (bandwidth, modulation type, number of carriers) are adapted by the transmitter 100 and the receiver 200 to use the lossy channel in an optimal manner. In other words, the transmitter 100 and the receiver 200 change the lengths Lh, La of the transmit signal 111 and the feedback signal 117 in dependence on the capacity of the channel. Accordingly, changes of the parameter of the transport channel can be made anytime by the transmitter 100 and the receiver 200 without a special synchronization between the transmitter 100 and the receiver 200. The message blocks 107 and the incremental redundancy blocks 109a to 109n of the blocks of user data 105 including additional binary signalization data (the signaling information) of the length Ls are transmitted from the transmitter 100 to the receiver 200 over the forward channel H.

The length Lh of the transmit signal 111 only has to fulfill the condition Lh > Ls. Accordingly, for transmitting the blocks of user data 105, Lw = Lh - Ls bits are available per transmit signal 111. In practice, the signalization data (the signaling information) 119 normally takes up only a small part of the transmit signal 111, i.e. Lh >> Ls or Lw >> Ls applies. As already described, the length Lw can be chosen independent of the length Lc of the code blocks of user data 105 and their portions or message blocks 107 and incremental redundancy blocks 109a to 109n having the length Lc(0), ..., Lc(N).

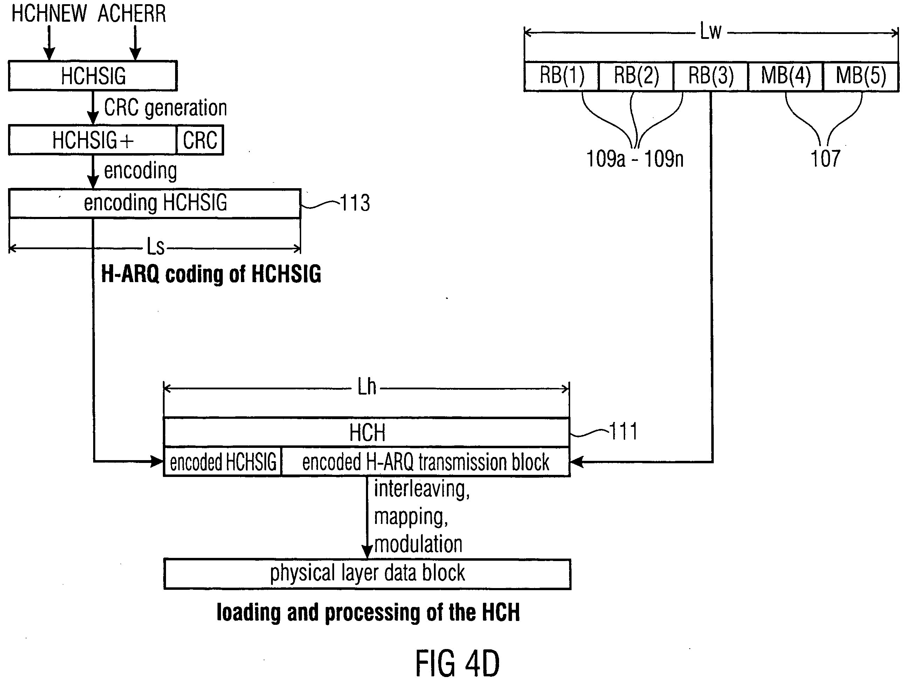

Fig. 4d shows the loading and the processing of the transmit signal 111 (HCH) is transmitted. As already described, the length Lh of the transmit signal 111 or the maximum size available for data in the transmit signal 111 can vary in dependence on the capacity of the channel.

It can be seen that the transmit signal 111 comprises on the one hand the signaling information 119 and on the other hand the encoded H-ARQ transmission block comprising the incremental redundancy blocks 109a to 109n and the message blocks 107.

The signaling information 119 comprises the number of entities that are scheduled for an initial transmission (which is equal to the number of message blocks in the transmit signal 111). This number of message blocks 107 is designated as HCHNEW. Furthermore, the signaling information 119 comprising an information (ACHERR) indicating if the last feedback signal 117 received at the transmitter 100 was corrupted or not. This information ACHERR can be signaled within a single bit.

A CRC code is added to the HCHNEW and ACHERR and a resulting block is encoded with a low rate convolutional code to derive the signaling information 119 of the length Ls.

The signaling information 119 and the block comprising the incremental redundancy blocks 109a to 109n and message blocks 107 are concatenated to derive the transmit signal 111 in the transmitter 100. The size of the transmit signal 111 can be managed by the inner link control of the transmitter 100 and may change with every TDD cycle. If a new TDD burst is to be assembled at the transmitter 100 (a new transmit signal 111 is to be assembled at the transmitter 100), a channel loader of the transmitter 100 retrieves the actual size of the transmit signal 111 from the inner link control, reserves the space required for the signaling information 119 and passes the length of the remaining free space in the transmit signal 111 to the transmit signal provider 103 or transmission block loader 103. As a consequence and as already described, the H-ARQ operation can be performed with any size of the transmit signal 111, which exceeds the size of the signaling information 119. After loading, the transmit signal 111 undergoes normal interleaving and is mapped and modulated by the physical layer.

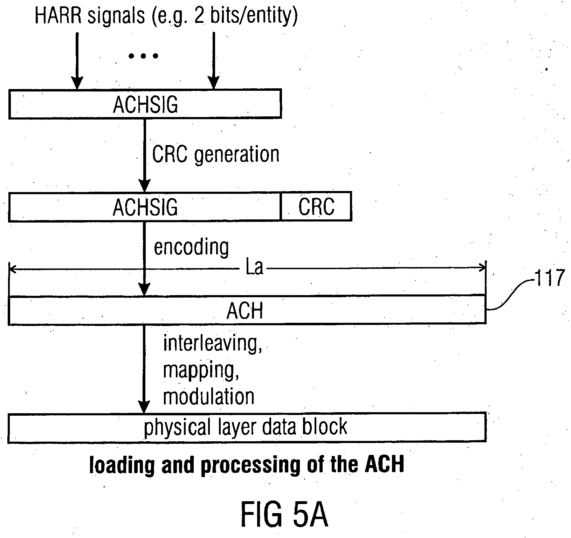

Fig. 5a shows the generation of the feedback signal 117 in the receiver 200, the feedback signal 117 typically comprises per generated receive entity 205a to 205m in the receiver 200 a feedback code indicating a state update of the receive entity 205a to 205m.

These feedback codes (which are also designated as HARR signals) are combined into a block named ACHSIG. After a CRC generation, the feedback signal 117 is passed through the physical layer for encoding and modulation.

The size La of the feedback signal 117 is managed by the inner link control of the receiver 200 and may change with every TDD cycle. If a new TDD burst is to be assembled at the receiver 200, the feedback signal provider 207 retrieves the actual (maximum) size La of the feedback signal 117 from the inner link control, calculates the number of HARR signals (or feedback codes) to be transmitted and loads these feedback codes into the feedback signal 117. Since the number of receive entities 205a to 205m is highly variable, the capacity of the feedback signal 117 may be exceeded at times, i.e. the feedback signal 117 does not convey the feedback code of all receive entities 205a to 205m. As an example, a feedback code for a receive entity 205a to 205m can comprise a single bit (indicating if a decoding of the receive entity's associated block of user data 105a to 105m was successful or not), but may also comprise more bits, e.g. 2 bits. An example for the use of 2 bits per receive entity will be described later on.

As already described, for an optimum usage of the return channel the channel encoding in the receiver 200 of the feedback code can be performed with different code rates. The selection of the code rate is made based on number of required feedback codes and the transmission statistics in the return channel.

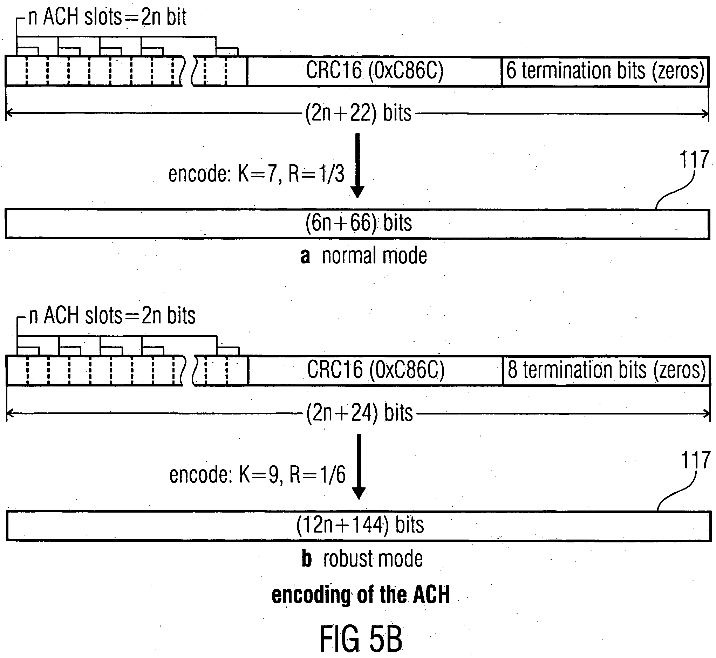

Fig. 5b shows an example for the encoding of the feedback codes to derive the feedback signal 117 for a normal mode with a code rate of R = 1/3 and a robust mode with a code rate of R = 1/6. As an example, at first the receiver 200 reduces the code rate until the remaining space in the feedback signal 117 is minimal. With a bad transmission statistic, i.e. with frequent CRC errors in the return channel and the use of more than two different code rates, the code rate can be reduced further.

In the following, a more detailed example will be given on the usage of the transmit entities in the transmitter 100 and the receive entities 205a to 205m in the receiver 200.

For optimally using the forward channel, the transmitter 100 and the receiver 200 process a variable number of blocks of user data 105 in parallel. Therefore, a separate transmit entity and a separate receive entity is used for every block of user data 105 in the transmitter 100 and the receiver 200. The transmit entities and receive entities (or in general the HARQ entities) are managed in lists in the transmitter 100 and in the receiver 200. For every new block of user data 105 lined up for transmission, an additional transmit entity and an additional receive entity is added to the list. If the transmission of a block of user data 105 is terminated, the associated transmit entity and the associated receive entity are removed from this list.

Every transmit entity and every receive entity passes a sequence of states resulting from the first transmission (of the message blocks 107) and the subsequent transmissions (of the incremental redundancy blocks 109a to 109n) and the feedback signal 117 of the receiver 200. It follows from the state of the transmit entity and the receive entity which portion (which incremental redundancy blocks 109a to 109n) of the block of user data 105 is to be transmitted next. The transmitter 100 uses a loading algorithm by which the bits in the forward channel are loaded with bits from the blocks of user data of the transmit entities. The loading is performed by passing through the list of transmit entities and concatenating the portions of the blocks of user data 105 (the message blocks 107 and the incremental redundancy blocks 109a to 109n) lined up for transmission until the length Lw is achieved. Since the length Lw is not connected with the length of the portions in any way, the last portion in the transmit signal 111 is normally only partly transmitted. In this case, the remaining rest will be transmitted at the beginning of the next transmit signal 111. Accordingly, the Lw bits of a transmit signal are generally "loaded" as follows, (1) the remaining rest of the last block, (2) portions of lengths Lc(0), ..., Lc(N) according to the states of the transmit entities, (3) a partly transmitted portion by which the transmit signal 111 is padded. If the length Lw is exactly obtained in the second step, the third step in the current transmit signal 111 and the first step in the next transmit signal 111 can be omitted. In practice normally not relevant but also admissible is the case that the length Lw is so small that no complete portion can be transmitted, in this case the second step will also be omitted and the current portion will successively be transmitted in the first step.

The described method operates at an optimum when the list of transmit entities and receive entities is sufficiently long to completely load the current transmit signal 111. If not enough transmit entities are available in the transmitter 100, i.e. the end of the list is reached during loading of the transmit signal 111 without reaching the length Lw, the list is again passed through. This process is cyclically repeated by the transmitter 100 until the length Lw is reached or all blocks of user data 105 in the list have been completely loaded into the transmit signal 111. The latter occurs when the data source provides no blocks of user data for a longer time period or the end of transmission is reached. In other words, the transmitter 100 fills the transmit signal 111 with message blocks 107 and incremental redundancy blocks 109a to 109n in a predetermined order until the transmit signal 111 is full (until a maximum size of the transmit signal 111 for the current capacity of the channel is reached).

The receiver 200 uses an unloading algorithm which corresponds to the loading algorithm of the transmitter 100 by which the bits are unloaded from the forward channel into the blocks of user data 105a to 105m of the receive entities 205a to 205m of the receiver 200. Since embodiments of the present invention ensure that the transmit entities of the transmitter 100 and the receive entities 205a to 205m of the receiver 200 run in parallel, only the number of first transmissions (HCHNEW) included in the transmit signal 111 (the number of message blocks 107 in the transmit signal 111) is required for the unloading in the receiver 200. Hence, this number is signaled in the signaling information 119. For these first transmissions the receiver 200 (in more detail the entity manager 203 of the receiver 200) generates new receive entities 205a to 205m.

For any receive entity 205a to 205m that has been newly generated or for which a further portion (a further incremental redundancy block 109a to 109n) has been received at the receiver 200, the receiver 200 calculates from the probabilities of the already received bits the mutual information of the block of user data 105a to 105m associated to the receive entity 205a to 205m. If the mutual information exceeds a predetermined threshold (for example the predetermined mutual information threshold), the decoding of the block of user data 105 will be performed by the receive entity 205a to 205m. The mutual information threshold is selected such that only those blocks of user data 105a to 105m are decoded for which a successful decoding is likely. Thereby, the number of necessary decoding processes in the receiver 200 is significantly reduced and no resources are unnecessarily wasted. If the mutual information threshold is not exceeded, the receive entity 205a to 205m determines from the difference between the determined mutual information and the mutual information threshold the number of minimum required subsequent transmissions (of incremental redundancy blocks 109a to 109n of the block of user data 105a to 105m associated to the receive entity 205a to 205m).

The acknowledgement signals or feedback codes (HARR) are transmitted from the transceiver 200 to the receiver 100 over the return channel ACH (also designated as rear channel or feedback channel). Every acknowledgment signal comprises or consists of one, two or more bits by which the state of a receive entity 205a to 205m in the receiver 200 is signaled or transmitted to the transmitter 100 and further transmission is controlled. As already stated, it is not necessary to transmit the current state of the receive entity 205a to 205m to the transmitter 100 as it is sufficient to just signal a state update of the receive entity 205a to 205m. In the configuration with two bits per feedback code, of the four states which can be signalized with the two bits, three can be used as follows: (1) decoding of the block of user data 105a to 105m is not yet terminated. This first case will be discussed in more detail below. (2) The block of user data 105a to 105m has been successfully decoded. In this case, the transmission of the block of user data 105a to 105m is successfully terminated. (3) The block of user data 105a to 105m has not been successfully decoded. In this case, the transmission of the block of user data 105a to 105m is continued with the next subsequent transmission (the transmission of an incremental redundancy block 109a to 109n of the block of user data 105a to 105m) or terminated with an error message, when the maximum number of subsequent transmissions has been reached (when all incremental redundancy blocks 109a to 109n of the block of user data 105a to 105m has have been transmitted to the receiver 200). The possible fourth state of the feedback code can be used for signalizing, like in the third state, an unsuccessful decoding of the block of user data 105a to 105m and for requesting more than one subsequent transmission for the block of user data 105a to 105m, for example, the next two subsequent transmissions (of the next two incremental redundancy blocks 109a to 109n of the block of user data 105a to 105m) or even an higher number of subsequent transmissions. In this case, with the help of the determined number of minimum required transmissions (of minimum required incremental redundancy blocks 109a to 109n for successful decoding of the block of user data 105a to 105m) it is decided whether state (3) or state (4) is signalized. Correspondingly, with more than two bits per feedback code (HARR), the additional states can be used for further differentiation of the number of subsequent transmissions requested in the next transmit signal 111.

Embodiments of the present invention do not require that the decoding processes initiated in the receiver 200 have to be terminated by the time the next feedback signal 117 with acknowledgement signals has to be compiled. For not yet terminated decoding processes, the above described first state of the feedback code of the receive entity 205a to 205m is signalized in the feedback signal 117. In this case, either (a) a further subsequent transmission is performed or (b) the termination of the decoding process is awaited in the receive entity 205a to 205m. The first case (a) causes subsequent transmissions whose necessity is not yet determined, while the latter case (b) can result in a heavy increase of the number of receive entities 205a to 205m in the receiver 200. A useful tradeoff consists of predetermining a threshold for the number of receive entities 205a to 205m up to which (b) is used; from the threshold onwards (a) is used. This threshold for the maximum number of receive entities 205a to 205m and transmit entities is typically known to the transmitter 100 and to the receiver 200. Hence, if this threshold of entities is exceeded, the transmitter 100 stops to transmit new message blocks 107 to the receiver 200 until one or some of the already generated transmit entities and receive entities 205a to 205m are destroyed.

The acknowledgement signals or feedback codes (HARR) of the receive entities 205a to 205m are combined to a block (see also Fig. 5a). This block is provided with a CRC code and encoded with a channel code to derive the feedback signal 117. Since the length La of the feedback signal 117 in the return channel is predetermined, the number of acknowledgement signals is selected such that the length at the output of the channel encoder utilizes the available length Lh and La as best as possible. If the number of receive entities 105a to 105m is smaller than the number of available acknowledgement signals, redundant acknowledgement signals in the feedback signal 117 remain unallocated; otherwise, the allocation is made according to the order in the list of the receive entities 205a to 205m to ensure that the transmitter 100 can determine which acknowledgement signal belongs to which of its transmit entities. In other words, the correspondence of the transmit entities in the transmitter 100 and the receive entities 205a to 205m in the receiver 200 allow the correct allocation of the acknowledgement signals in the transmitter 100.

As already described in conjunction with Fig. 5b, for an optimum usage of the return channel, the channel encoding of the feedback signal 117 can be performed with different code rates. In this case, the transmitter 100 decodes the received feedback signals for all defined code rates and decides with the help of the CRC code which code rate exists. The selection of the code rate in the receiver 200 is made based on the number of required acknowledgement signals and the transmission statistics in the return channel. At first, the code rate is reduced until the number of redundant acknowledgement signals in the feedback signal 117 becomes minimal (until the unused space in the feedback signal 117 becomes minimal). With a bad transmission statistic, i.e. with frequent CRC errors in the return channel, the code rate can be reduced further by the receiver 200.

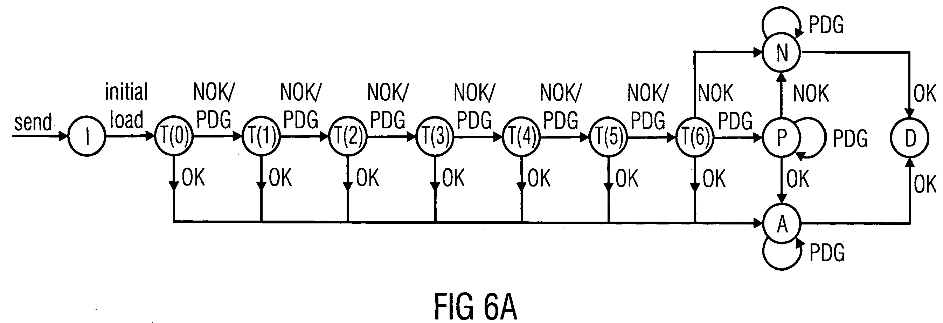

In the following, the handling of the states of the transmit entities at the transmitter 100 will be described in more detail using Fig. 6a showing a state diagram for a transmit entity at the transmitter 100. As can be seen, the transmit entity has the following different states: I = idle, T = transmit, P = pending, A = ACK, N = NAK, and D = delivered. As already described, the state of a transmit entity is updated in response to a state update of the receive entity 205a to 205m decoding the block of user data 105a to 105m associated to the transmit entity. Hence, the state updates of the transmit entity are based on the feedback code or acknowledgement signal of the corresponding receive entity 205a to 205m. The feedback code or acknowledgement signal (HARR) has three different possible states: OK signaling a successful decoding of the associated block of user data 105a to 105m, NOK signaling an unsuccessful decoding of the associated block of user data 105a to 105m and PDG signaling pending and therefore an unfinished decoding of the associated block of user data 105a to 105m.

At the transmitter 100, new transmit entities with the state idle are created by providing a block of user data 105 with a message block 107 and a plurality of incremental redundancy blocks 109a to 109n. The state of a transmit entity changes to transmit when the initial transmission of the transmit entity is performed (when the message block 107 of the transmit entity's associated block of user data 105 is inserted into the transmit signal 111). At the receiver 200 new receive entities 205a to 205m with the state transmit are created by unloading the initial transmissions (by unloading the message blocks 107). A state diagram of such receive entity 205a to 205m is shown in Fig. 6b. If the incremental redundancy of a block of user data 105a to 105m has been fully transmitted, the state of the transmit entity and the corresponding receive entity 205a to 205m changes to pending, thereby excluding the transmit entity and the corresponding receive entity 205a to 205m from loading at the transmitter 100 and unloading at the receiver 200.

Each transmit entity and each receive entity 205a to 205m remains in state transmit or pending until:
1) a successful decoding has been performed (ACK); or
2) the incremental redundancy for the associated block of user data 105a to 105m has been fully transmitted and the final decoding has failed (NAK).

To allow for synchronization of the transmitter 100 and the receiver 200 and to cope with a signaling information error (HCHSIGERR) and a feedback signal error, the state changes obey a master-slave scheme with the transmitter 100 acting as the master and the receiver 200 acting as the slave.

This also applies to the ACK/NAK states. Therefore, if the above condition 1 or condition 2 becomes true for a receive entity 205a to 205m at the receiver 200, the state of the this receive entity 205a to 205m is not changed to ACK/NAK immediately but remains unchanged until the respective condition has been successfully reported to the transmitter 100 via the return channel in the feedback signal 117. Thus, the ACK/NAK state is set at the transmit entity first and then adopted by the corresponding receive entity 205a to 205m if the transmit signal 111 indicates a successful transmission of the last feedback signal 117. If the last feedback signal 117 is not transmitted successfully, the states remain unchanged.

In the case of a signaling information error, the receiver 200 does not know whether the feedback signal 117 has been transmitted successfully. In this case, the states of the receive entities 205a to 205m remain unchanged and the states of the transmit entities are restored (equals reset to the previous values), thereby establishing consistent states at the transmit entities and the receive entities 205a to 205m.

To allow for a flow control at the transmitter 100, the ACK/NAK signaling from the feedback signal 117 is followed by an additional signaling in order to confirm that the ACK/NAK state and in case of ACK, the block of user data 105a to 105m has been passed to the next layer at the receiver 200, i.e. the result has been delivered. The transition from the ACK/NAK state to the state delivered (D) is performed in the same way as the transition from transmit/pending to ACK/NAK, i.e. the state delivered is set at the transmit entity first and then adopted by the corresponding receive entity 205a to 205m if the current transmit signal 111 indicates a successful transmission of the last feedback signal 117. Making use of this additional signaling, the transmitter 100 may stop loading new transmit entities if the number of transmit entities and receive entities 205a to 205m with ACK/NAK state exceeds a certain limit.

At the receiver 200 the receive entities 205a to 205m with the state delivered are removed from the list of receive entities 205a to 205m after unloading. Accordingly, at the transmitter 100 transmit entities with state delivered are removed after their associated block of user data 105a to 105 is delivered on the receive side.

From Fig. 6a it can be seen that the transmit states include the level of transmitted incremental redundancy: T(0) denotes the initial transmission (the transmission of the message block 107), while T(6) denotes a full transmission (the transmission of all incremental redundancy blocks 109a to 109n of a block of user data 105). In the example shown in Figs. 6a and 6b six incremental redundancy blocks 109a to 109n are provided for each block of user data 105. Nevertheless, this number is just an example and can vary in dependence on the gradation of the code rate for the different blocks of incremental redundancy 109a to 109n.

The states change according to the feedback codes in the feedback signal 117: OK, NOK, and pending (PDG). If the feedback signal 117 is erroneous (CRC error), pending is assumed for all transmit entities. The same is true for all transmit entities that are not signaled within the current feedback signal 107 due to the capacity limitations. Hence, in the case of pending, it is assumed by the transmitter 100 that a further incremental redundancy block 109a to 109n of the transmit entities associated block of user data 105 is to be transmitted to the receiver 200. In other words, the transmitter 100 transmits incremental redundancy blocks 109a to 109n for all transmit entities with pending state.

Please refer to Fig. 6b. Due to the master-slave scheme described above, the state changes in the receive entities 205a to 205m depend on the feedback signal 117 and the feedback signal error flag comprised in the signaling information 119 of the transmit signal 111 (ACHOK or ACHERR). This feedback signal error flag of the transmit signal 111 indicates if the last feedback signal 117 received at the transmitter 100 was corrupted (ACHERR) or was not corrupted (ACHOK). While data transmission proceeds, the state of the receive entity 205a to 205m is given by the combination of the transmission state (T(0), ..., T(6), P) and the feedback code (OK/NOK/PDG) that has been signaled via the respective feedback code slot in the feedback signal 117. Receive entities 105a to 105m that cannot be signaled within the current feedback signal 117 due to capacity limitations are assumed to be pending (PDG). If data transmission has finished by reaching the state ACK (A) or NAK (N), the receiver 200 signals pending (PDG) via the feedback signal 117 until the block of user data 105a to 105m has been delivered to the next layer. Then, OK is signaled and in case of confirmation by the transmitter 100, the receive entity 205a to 205m enters the state delivered (D) and can be destroyed by the entity manager 203 of the receiver 200.

The robustness of transmission and correspondence of the transmit entities in the transmitter and the receive entities 205a to 205m in the receiver 200 is ensured by a three-stage error checking, which will be described in the following. Thereby, robustness increases from stage to stage. When error checking fails at the first or second stage, the next stage will intervene in a correcting manner. If error checking fails at the third stage, transmission is interrupted. In this case the correspondence of the transmit entities in the transmitter and the receive entities 205a to 205m in the receiver is lost.

When the transmitter 100 cannot successfully decode a feedback signal 117 with acknowledgment signals (HARR), i.e. when decoding for all defined code rates results in a CRC error, and at the same time the above described similarity threshold between the given bit pattern or patterns (which is/are used for indicating a signaling information error or another error during unloading the transmit signal 111) and the feedback signal 117 is not exceeded, a standard assumption depending on the state of the allocated transmit entities is used for any acknowledgment signal or feedback code. In this case, the transmitter 100 can (a) perform a further subsequent transmission or (b) wait for successful transmission of the feedback code. Here, the considerations regarding the tradeoff between unnecessary subsequent transmissions and a heavy increase of the number of transmit entities and receive entities 205a to 205m apply analogously.

The error case of the unsuccessful decoding of the feedback signal 117 is signaled to the receiver and the signalization information in the transmit signal 111 (by means of the feedback signal error flag (ACHERR)). Thus, the receiver 200 knows whether the transmitter 100 has performed the further transmission in the forward channel based on the feedback codes transmitted by the receiver 200 or by using the standard assumption as stated above. Thereby, the unloading in the receiver 200 can be correctly performed, i.e. the correspondence of the transmit entities in the transmitter and the receive entities 205a to 205m in the receiver is ensured. Additionally, the receiver 200 uses this error message for forming the transmission statistic in the return channel and possibly reduces the code rate in the return channel (used for encoding the feedback signal 117).

In the signaling information 119 of the transmit signal 111, the number of first transmissions (HCHNEW) in the current transmit signal 111 and the error information (ACHERR) regarding the correctness of the received feedback signal 117 are transmitted together. Therefore, the values (HCHNEW and ACHERR) are combined (see also Fig. 4d) to a binary data word, provided with a CRC code for error checking and encoded with the channel code with low code rate. The CRC code and the code rate are selected such that the receiver 200 can correctly decode the signalization information 119 with high probability, even with very bad transmission conditions.

Once the receiver 200 cannot successfully decode the signaling information 119 in the transmit signal 111, the unloading of the message blocks 107 and the incremental redundancy blocks 109a to 109n comprised in the transmit signal 111 cannot be performed. In this case, the receiver 200 transmits, in the next feedback signal 117, the given bit pattern of the length La which is known to the transmitter 100 instead of the encoded feedback signals.

As already described, when the transmitter 100 cannot successfully decode a feedback signal 117 received in the return channel, this feedback signal 117 is correlated with one or more given bit patterns. If a predetermined similarity threshold is exceeded, the transmitter 100 assumes that the receiver 200 was not able to unload the message blocks 107 and incremental redundancy blocks 109a to 109n in the transmit signal 111 and resets the states of its transmit entities such that the correspondence of the transmit entities in the transmitter 100 and the receive entities 205a to 205m in the receiver 200 is maintained and the transmission can be continued as long as the assumption is correct. If this assumption is wrong, the correspondence of the transmit entities in the transmitter 100 and the receive entities 205a to 205m in the receiver 200 is lost and transmission is interrupted, i.e. the throughput in the forward channel is close to zero. This reduction can be, for example, detected by a superior sequence control.

This error handling mechanism is also shown in the state diagram shown in Fig. 7. From Fig. 7 it can be seen that the transmit signal 111 (HCH) is transmitted from the transmitter to the receiver. The transmit signal 111 is received at the receiver and the signaling information (HCHSIG) 119 is decoded at the receiver. If the CRC of the signaling information 119 was correct, the receiver 200 saves the states of its receive entities 205a to 205m and unloads the message blocks 107 and incremental redundancy blocks 109a to 109n comprised in the transmit signal 111. If an unload error occurs (due to the wrong CRC of the message blocks 107 and incremental redundancy blocks 109a to 109n) the receiver restores the states of its receive entities 205a to 205m.

If the unloading of the transmit signal 111 happened without an error, the receiver 200 loads the feedback signal 117 (ACH) with the feedback codes of the receive entities 205a to 205m and transmits the feedback signal 117 to the transmitter 100. Furthermore, if an error during the unloading occurred, the receiver loads a first given bit pattern into the feedback signal 117 if this error occurred during unloading the message blocks 107 and the incremental redundancy blocks 109a to 109n and a second given bit pattern if this unloading error occurred during the unloading (or decoding) of the signaling information 119 comprised in the transmit signal 111 (e.g. if the CRC-check of the signaling information 119 failed).

The transmitter 100 receives this feedback signal 117 and if no external error occurs decodes the feedback signal 117 with all predetermined code rates (in the example shown in Fig. 7 with two different code rates (normal and robust)). If the cyclic redundancy check was passed, the transmitter 100 performs a normal processing of the feedback codes. If the cyclic redundancy check wasn't passed, the transmitter 100 checks if the feedback signal 117 comprises one of the given error patterns. If the feedback signal 117 comprises one of these given error patterns, the transmitter 100 restores the states of its transmit entities. If the feedback signal 117 does not comprise one of these given error patterns, the transmitter 100 assumes that the last transmit signal 111 sent to the receiver 200 was not corrupted, and that only the feedback signal 117 transmitted from the receiver 200 to the receiver 100 was corrupted and hence, assumes for every transmit entity a pending state.

To summarize, the unloading of the transmit signal 111 at the receiver 200 fails in case of an error in the signaling information 119 or in case of an unload error. While the signaling information error is detected by checking the respective CRC, any other inconsistency that is detected while unloading the transmit signal 111 is termed unload error. Both errors have to be reported to the transmitter 100 to allow for error recovery and synchronous operation of the transmitter 100 and the receiver 200. Internal error reporting is provided by loading the feedback signal 117 with the above mentioned second given bit pattern 0101...0101 in case of the signaling information (CRC) error and the above mentioned first given bit pattern 1010...1010 in case of an unload error. These given bit patterns are detected by the transmitter 100 by means of a correlation measurement and a detection threshold. Additionally, external error reporting may be used by signaling the error condition via a link control channel.

In a data transmission system according to the OSI reference model, the described method forms the lower part of the securing layer (data link layer). For flow control with the securing layer, which itself forms the basis for flow control between securing layer and the layers above, embodiments of the present invention provide two mechanisms which will be described in the following.

As soon as the length Lh of the next transmit signal 111 in the forward channel is known, the transmitter 100 can determine the maximum possible number of first transmissions (of message blocks 107) for this transmit signal 111 by evaluating the list of transmit entities. With the help of this number, input side flow control can be performed by the transmitter 100. For the case that the payload data is provided by the data source, the delivery and provision of further blocks of user data 105 is stopped as soon as optimum utilization of the next transmit signal 111 is ensured. For the case that the payload data is requested from the data source, the required amount is requested. In both cases, reserves can be kept, i.e. more payload data than needed is received or requested. Thereby, optimum utilization is possible even when delivery by the data source is stagnant or the data source cannot immediately serve the request for data.

Furthermore, as already described in conjunction with Fig. 6b, if immediate acceptance of payload data of the blocks of user data 105a to 105m successfully decoded in the receiver 200 by the data sink is not ensured, additionally output side flow control can be employed. In this case, the transmit entities and receive entities 205a to 205m of the successfully transmitted blocks of user data 105a to 105m remain in the lists of the transmitter 100 and the receiver 200 as inactive entities until the associated payload data are accepted by the data sink. The acceptance is signalized by additional acknowledgement signals (or feedback codes) in the return channel (in the feedback signal 117). If the data sink does not accept the payload data, the number of inactive transmit entities and receive entities 205a to 205m increases correspondingly. In this case, the transmitter 100 stops the generation of further transmit entities and the first transmissions as soon as the number of the inactive transmit entities reaches a predetermined limit.

In the following, some features, improvements and advantages of embodiments of the present invention will be summarized.

Embodiments of the present invention enable a transmission of package based data via disturbed or lossy channels.

A data throughput is optimized by using a hybrid-ARQ method (hybrid ARQ type II, incremental redundancy and with an exemplary implementation using turbo codes). The implementation using turbo codes is just an exemplary implementation. Other implementations using different coding schemes are also possible.

Embodiments of the present invention allow to better utilize the currently available channel capacity in the lossy channel by transmitting incremental redundancy in response to decoding failures. Embodiments of the present invention transmit (only) new information between the transmitter 100 and the receiver 200, not the current state of a transmit entity or receive entity 205a to 205m (state changes result inherently synchronously from the definition of the state).

A receiver according to an embodiment of the present invention determines the information content of the received data (based on the mutual information I) and can request a suitable amount of redundancy in dependence on this determined mutual information. Furthermore, such a receiver can also use the information content of the received data for deciding whether a decoding at the current time is already promising. Thereby, computing resources are saved in the receiver 200, since only the blocks of user data 105a to 105m are decoded for which a successful decoding is likely and all further blocks of user data 105a to 105m are decoded only when a sufficient computing capacity exists.

Embodiments of the present invention do not require specific regulations when return transmission (of the feedbacks signal 117) is too disturbed or gets lost. This could be the case with different transmit powers (for example for a stationary land transmitting station and a mobile receiver, such as a sailing boat). When the feedback signal 117 is lost or corrupted, the transmitter 100 can transmit additional redundancy which can result in a lower throughput for the transmission but does not compromise the transmission any further. Hence, no special states with interruption of the current transmission or special cycles with requesting and canceling the loss of the feedback signal 117 are made.

In the following, some improvements of embodiments of the present invention over conventional communication systems shall be summarized.

Embodiments of the present invention enable a synchronous processing in the transmitter 100 and the receiver 200, i.e. a transmission of the states of the transmitter 100 and the receiver 200 is not required. Hence, transmission resources are saved, since the states do not have to be transmitted during every transmission of a transmit signal 111 and/or a feedback signal 117.

Another improvement is the determination of the mutual information by the receiver 200 currently transmitted over the lossy channel. Thereby, unpromising decoding attempts in the receiver 200 can be avoided (by determining the necessary decoder threshold) and the additionally required incremental redundancy information for the next transmissions can be requested by the receiver 200.

Another improvement is that embodiments of the present invention consider asymmetric channels having a weaker return channel (for example with less transmit power).

An erroneous back transmission of the acknowledgement signals (of the feedback signal 117) does not result in a specific treatment and possible interruption of the entire transmission.

In the following, some main features of embodiments of the present invention will be summarized.

Embodiments of the present invention are based on a hybrid ARQ method type II (with a transmission of incremental redundancy). Furthermore, a synchronous processing in the transmitter 100 and the receiver 200 is employed, i.e. the transmission of the states of the transmitter 100 and the receiver 200 is not required. By determining the necessary decoding threshold in the form of the mutual information, unpromising decoding attempts in the receiver 200 can be avoided and the additionally required redundancy information can be requested. Furthermore, at least some embodiments of the present invention implement a package transmission with flow control on both sides in the transmitter 100 and the receiver 200. Furthermore, embodiments of the present invention provide an increased robustness during asymmetrical transmissions with a weaker return channel (e.g. less transmit power). Furthermore, embodiments of the present invention support any word length of the used channel codes and the division into incremental redundancy blocks of any size and number.

To summarize, embodiments of the present invention provide a digital data transmission for fading channels or lossy channels (radio channels with disturbances). A complete communication system and communication method has been described herein, with transmission and back transmission and state machines controlling the transmission in the transmitter 100 and the receiver 200.

Embodiments of the present invention can be used, for example, in mobile radio systems (such as LTE, HSDPA, HSUPA).

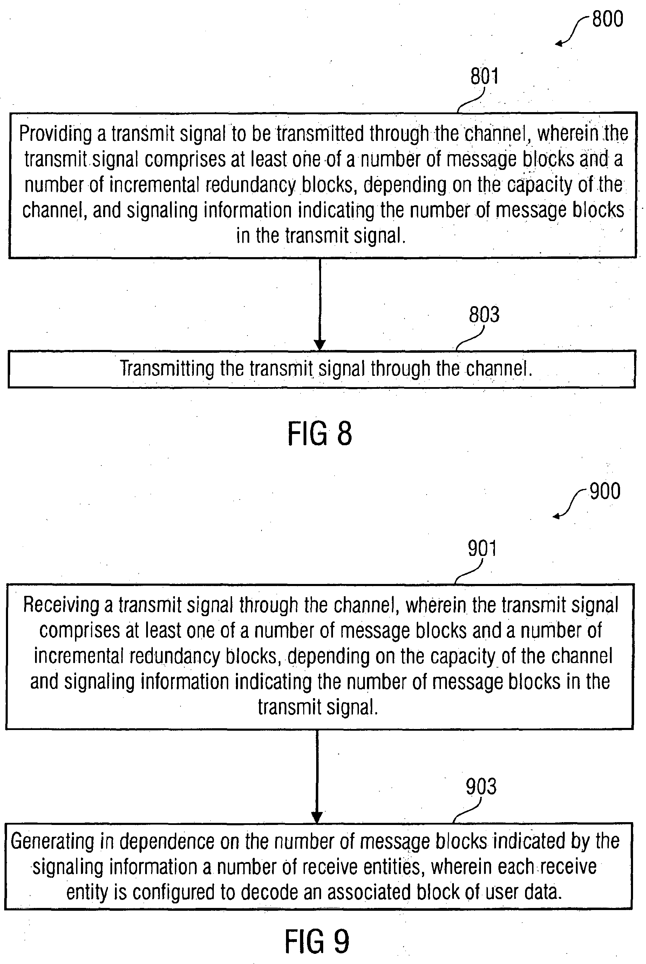

Fig. 8 shows a flow diagram of a method 800 according to an embodiment of the present invention for transmitting blocks of user data through a channel of variable capacity, wherein each block of user data is encoded into a message block and a plurality of incremental redundancy blocks.

The method 800 comprises a step 801 of providing a transmit signal to be transmitted through the channel, wherein the transmit signal comprises at least one of a number of message blocks and a number of incremental redundancy blocks, depending on the capacity of the channel, and signaling information indicating the number of message blocks in the transmit signal.

Furthermore, the message 800 comprises a step 803 of transmitting the transmit signal through the channel.

As an example, the method 800 may be performed by the transmitter 100 or any other transmitter according to an embodiment of the present invention.

Fig. 9 shows a flow diagram of a method 900 according to an embodiment of the present invention for receiving blocks of user data through a channel of variable capacity. Each of the blocks of user data is encoded into a message block and a plurality of incremental redundancy blocks.

The method 900 comprises a step 901 of receiving a transmit signal through the channel, wherein the transmit signal comprises at least one of a number of message blocks and a number of incremental redundancy blocks, depending on the capacity of the channel and signaling information indicating the number of message blocks in the transmit signal.

Furthermore, the method 900 comprises a step 903 of generating in dependence on the message blocks indicated by the signaling information a number of receive entities, wherein each receive entity is configured to decode an associated block of user data.

The method 900 may be performed by the receiver 200 or any other receiver according to an embodiment of the present invention.

The methods 800, 900 may be supplemented by any of the features and functionalities described herein with respect to the apparatus, and may be implemented using the hardware components of the apparatus.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is the intent, therefore, to be limited only by the scope of the impending patent claims and not by the specific details presented by way of description and explanation of the embodiments herein.

## Claims

1. A transmitter (100) for transmitting blocks of user data (105; 105a-105m) through a channel of variable capacity, the transmitter (100) comprising:
an encoder (101) configured to encode each block of user data (105; 105a-105m) into a message block (107) and a plurality of incremental redundancy blocks (109a to 109n);
a transmit signal provider (103) configured to provide a transmit signal to be transmitted through the channel, wherein the transmit signal (111) comprises at least one of a number of message blocks (107) and a number of incremental redundancy blocks (109a-109n), depending on the capacity of the channel, and signaling information (119) indicating the number of new message blocks (107) in the transmit signal (111);
a receive interface (113) configured to receive a feedback signal (117) indicating whether decoding of a block of user data by a receive entity (205a-205m) in a receiver (200) processing the block of user data (105; 105a-105m) transmitted through the channel was successful or not;
an entity manager (115) configured to generate for each block of user data (105; 105a-105m) whose message block (107) is inserted into the transmit signal (111) by the transmit signal provider (103) a transmit entity associated to the block of user data (105; 105a-105m) and to update a state of the transmit entity in dependence on the received feedback signal (117); and
wherein the state of a generated transmit entity indicates which additional incremental redundancy block (109a-109n) of the transmit entity's associated block of user data (105; 105a-105m) is to be transmitted next, if the received feedback signal indicates unsuccessful decoding for said transmit entity's associated block of user data (105; 105a-105m),
wherein the transmit signal provider (103) is configured to fill the transmit signal with the at least one of a number of message blocks (107) and a number of incremental redundancy blocks (109a - 109n) in a predetermined order by passing through a list of the generated transmit entities, to include for each transmit entity the incremental redundancy block (109a-109n) of its associated block of user data (105; 105a-105m) indicated by the state of the transmit entity, and, if the end of the list is reached and there is still space left in the transmit signal, to fill the transmit signal with at least one new message block until the transmit signal is full or until all new message blocks have been inserted.

2. The transmitter (100) according to claim 1,
wherein the feedback signal (117) comprises for a given block of user data (105; 105a-105m) to be decoded a redundancy information indicating a minimum number of additional incremental redundancy blocks (109a-109n) to be transmitted to the receiver (200) for decoding the given block of user data (105; 105a-105m) in a receive entity (205a-205m) of the receiver (200) associated to the block of user data (105; 105a-105m); and
wherein the transmit signal provider (103) is configured to, in dependence on the received redundancy information, insert the minimum number of incremental redundancy blocks (109a-109n) of the block of user data (105; 105a-105m) into the transmit signal (111).

3. The transmitter (100) according to one of claims 1 or 2,
wherein the entity generator (115) is configured to destroy a generated transmit entity if a state of the generated transmit entity indicates a finished processing of the generated transmit entity's associated block of user data (105; 105a-105m),
wherein the state of a generated transmit entity indicates a finished processing of the generated transmit entity's associated block of user data (105; 105a-105m) if the received feedback signal indicates successful decoding for said transmit entity's associated block of user data (105; 105a-105m).

4. The transmitter (100) according to one of claims 1 to 3,
wherein the transmit signal provider (103) is configured to determine in dependence on the capacity of the channel a maximum size of the transmit signal (111); and
wherein, if after inserting all new message blocks there is still space in the transmit signal, the transmit signal provider (103) is configured to further fill the transmit signal (111) by passing through the list of transmit entities again and inserting for each transmit entity the next additional incremental redundancy block (109a - 109n) of its associated block of user data (105; 105a-105m) until the maximum size of the transmit signal is reached.

5. The transmitter (100) according to one of claims 1 to 4,
wherein the transmit signal provider (103) is further configured to provide the transmit signal (111) such that the signaling information (119) further indicates if the last feedback signal (117) received by the receive interface (113) was corrupted.

6. The transmitter (100) according to claim 5,
wherein the transmitter (100) is configured to, if the last received feedback signal (117) was corrupted, compare the last feedback signal (117) with a given bit pattern; and
wherein the entity manager (115) is configured to, if a given similarity threshold between the last received feedback signal (117) and the given bit pattern is not exceeded, update the state of each generated transmit entity independent of feedback codes in the last received feedback signal (117), such that for each generated transmit entity the next incremental redundancy block (119a-119n) of the generated transmit entity's associated block of user data (105; 105a-105m) is to be transmitted, if not all incremental redundancy blocks (109a-109n) of the generated transmit entity's associated block of user data (105; 105a-105m) were already transmitted.

7. The transmitter (100) according to claim 6,
wherein the entity manager (115) is configured to, if the given similarity threshold between the last feedback signal (117) and the given bit pattern is exceeded, reset a state of each generated transmit entity to an initial state, such that for each generated transmit entity the message block (107) of the transmit entity's associated block of user data (105; 105a-105m) is to be transmitted.

8. The transmitter (100) according to one of claims 5 to 7,
wherein the receive interface (113) is configured to decode the feedback signal (117) with a plurality of given different code rates and if for none of the given code rates a decoding of the feedback signal (117) was successful, to define the feedback signal (117) as being corrupted.

9. The transmitter (100) according to one of claims 1 to 8,
wherein the transmit signal provider (103) is configured to provide the transmit signal (111) such that message blocks (107) and incremental redundancy blocks (109a-10n) of different blocks of user data (105; 105a-105m) are arranged subsequent in the transmit signal (111) with no further header information in-between.

10. A communication system comprising:
a transmitter (100) according to one of claims 1 to 9; and
a receiver (200) for receiving the blocks of user data (105; 105a-105m) through the channel of variable capacity, the receiver (200) comprising:
a receive interface (201) configured to receive the transmit signal (111) through the channel, ; and
an entity manager (203) configured to generate, in dependence on the number of new message blocks (107) indicated by the signaling information (119), a number of receive entities (205a-205m), wherein each receive entity (205a-205m) is configured to decode an associated block of user data (105; 105a-105m),
wherein the receive interface (201) is configured to unload the transmit signal using a list of the generated receiving entities in the receiver corresponding to the list of generated transmit entities in the transmitter.

11. The communication system according to claim 10,
wherein a generated receive entity (205a-205m) is configured to start decoding its associated block of user data (105; 105a-105m) by decoding a message block (107) of the generated receive entity's associated block of user data (105; 105a-105m) and to, upon an unsuccessful or successful decoding of the message block (107), update a state of the generated receive entity(205a-205m), wherein the state of the generated receive entity indicates which encoded block (107, 109a-109n) associated with the generated receive entity's block of user data (105; 105a-105m) was last received.

12. The communication system according to one of claims 10 and 11,
wherein a generated receive entity (205a-205m) is configured to, upon reception of at least one incremental redundancy block (109a-109n) of the generated receive entity's block of user data (105; 105a-105m) combine the at least one incremental redundancy block (109a-109n) with a message block (107) of the generated receive entity's block of user data (105; 105a-105m), decode a resulting combined block and upon an unsuccessful or successful decoding of the combined block update the state of the generated receive entity (205a-205m), wherein the state of the generated receive entity indicates which encoded block (107, 109a-109n) associated with the generated receive entity's block of user data (105; 105a-105m) was last received.

13. The communication system according to one of claims 10 to 12, further comprising
a feedback signal provider (207) configured to provide the feedback signal (117), wherein a first value of the feedback code associated with the generated receive entity's block of user data (105; 105a-105m) corresponds to a successful decoding of said block of user data, and a second value of the feedback code associated with the generated receive entity's block of user data (105; 105a-105m) corresponds to an unsuccessful decoding of said block of user data; and
wherein the first value and the second value are independent of a current state of the generated receive entity (205a-205m), wherein the state of the generated receive entity indicates which encoded block (107, 109a-109n) associated with the generated receive entity's block of user data (105; 105a-105m) was last received.

14. The communication system according to claims 10 to 12, further comprising:
a feedback signal provider (207) configured to provide the feedback signal (117) and to choose a code rate of the feedback signal (117) in dependence on the capacity of the channel;
wherein the feedback signal provider (207) is configured to provide, for a chosen code rate of the feedback signal (117), the feedback signal (117) by inserting into the feedback signal (117), for each generated receive entity (205a-205m), an associated feedback code indicating if a decoding of the generated receive entity's block of user data (105; 105a-105m) was successful, until a maximum capacity of the feedback signal (117) for the chosen code rate is reached or until the feedback signal (117) comprises for each generated receive entity (205a-205m) an associated feedback code.

15. The communication system according to one of claims 10 to 14,
wherein a generated receive entity (205a-205m) is configured to determine a mutual information of its associated block of user data (105; 105a-105m) based on a received message block (107) and, if incremental redundancy blocks (109a-109n) of the generated receive entity's block of user data (105; 105a-105m) have been already transmitted to the generated receive entity(205a-205m), based on these incremental redundancy blocks (109a-109n), compare the determined mutual information with a mutual information threshold and start the decoding of the generated receive entity's block of user data (105; 105a-105m) if the determined mutual information exceeds the mutual information threshold.

16. The communication system according to claim 15,
wherein the generated receive entity (205a-205m) is configured to determine , based on the determined mutual information, a minimum number of additional incremental redundancy blocks (109a-109n) needed for a successful decoding of the generated receive entity's block of user data (105; 105a-105m); and
wherein the receiver (200) further comprises a feedback signal provider (207) configured to provide a feedback signal (117) comprising a redundancy information indicating the number of additional incremental redundancy blocks (109a-109n) needed for a successful decoding of the generated receive entity's block of user data (105; 105a-105m).

17. The communication system according to claim 10 to 12, further comprising:
a feedback signal provider (207) configured to provide the feedback signal (117) indicating whether decoding of a block of user data by a generated receive entity (205a-205m) was successful or not, the feedback signal (117) comprising at least one error correction bit for an error correction check at a transmitter (100) configured to receive the feedback signal (117);
wherein the feedback signal provider (207) is configured to, if the received transmit signal (111) is corrupted provide the feedback signal (117) with a given bit pattern independent of the states of the generated receive entities (205a-205m); and
wherein the given bit pattern causes the error correction check of the feedback signal (117) performed at the transmitter (100) receiving the feedback signal (117) to fail.

18. The communication system according to one of claims 10 to 17,
wherein the entity manager (203) is configured to, if the received transmit signal (111) is corrupted reset the generated receive entities (205a-205m) to a state in which each generated receive entity (205a-205m) waits for a message block (107) of the generated receive entity's block of user data (105; 105a-105m) to be received anew.

19. A method (800) for transmitting blocks of user data (105; 105a-105m) through a channel of variable capacity, wherein each block of user data (105; 105a-105m) is encoded into a message block (107) and a plurality of incremental redundancy blocks (109a-109n), the method (800) comprising:
providing (801) a transmit signal (111) to be transmitted through the channel, wherein the transmit signal (111) comprises at least one of a number of message blocks (107) and a number of incremental redundancy blocks (109a-109n), depending on the capacity of the channel, and signaling information (119) indicating the number of new message blocks (107) in the transmit signal (111); and
transmitting (803) the transmit signal (111) through the channel,
by a receive interface (113), receiving a feedback signal (117) indicating changes of states of receive entities (205a-205m) in a receiver (200) processing the blocks of user data (105; 105a-105m) transmitted through the channel by a receive interface (113);
by an entity manager (115), generating for each block of user data (105; 105a-105m) whose message block (107) is inserted into the transmit signal (111) by the transmit signal provider (103) a transmit entity associated to the block of user data (105; 105a-105m) and updating a state of the transmit entity in dependence on the received feedback signal (117),
wherein the state of a generated transmit entity indicates which additional incremental redundancy block (109a-109n) of the transmit entity's associated block of user data (105; 105a-105m) is to be transmitted next, if the received feedback signal indicates unsuccessful decoding for said transmit entity's associated block of user data (105; 105a-105m),
wherein the transmit signal is provided by filling the transmit signal with the at least one of a number of message blocks (107) and a number of incremental redundancy blocks (109a - 109n) in a predetermined order by passing through a list of the generated transmit entities, including for each transmit entity the incremental redundancy block (109a-109n) of its associated block of user data (105; 105a-105m) indicated by the state of the transmit entity, and, if the end of the list is reached and there is still space left in the transmit signal, filling the transmit signal with at least one new message block until the transmit signal is full or until all new message blocks have been inserted.

20. A computer program having a program code for performing, when running on a computer, a method according to claim 19.

## Patentansprüche

1. Ein Sender (100) zum Übertragen von Blöcken von Nutzerdaten (105; 105a-105m) durch einen Kanal einer variablen Kapazität, wobei der Sender (100) folgende Merkmale aufweist:
einen Codierer (101), der dazu konfiguriert ist, jeden Block von Nutzerdaten (105; 105a-105m) zu einem Nachrichtenblock (107) und einer Mehrzahl inkrementaler Redundanzblöcke (109a bis 109n) zu codieren;
einen Sendesignalbereitsteller (103), der dazu konfiguriert ist, ein Sendesignal bereitzustellen, das durch den Kanal gesendet werden soll, wobei das Sendesignal (111) zumindest einen einer Anzahl von Nachrichtenblöcken (107) und eine Anzahl inkrementaler Redundanzblöcke (109a-109n), je nach der Kapazität des Kanals, und Signalisierungsinformationen (119), die die Anzahl neuer Nachrichtenblöcke (107) in dem Sendesignal (111) angeben, aufweist;
eine Empfangsschnittstelle (113), die dazu konfiguriert ist, ein Rückkopplungssignal (117) zu empfangen, das angibt, ob ein Decodieren eines Blocks von Nutzerdaten seitens einer Empfangsentität (205a-205m) in einem Empfänger (200), der den durch den Kanal gesendeten Block von Nutzerdaten (105; 105a-105m) verarbeitet, erfolgreich war oder nicht;
einen Entitätsverwalter (115), der dazu konfiguriert ist, für jeden Block von Nutzerdaten (105; 105a-105m), dessen Nachrichtenblock (107) seitens des Sendesignalbereitstellers (103) in das Sendesignal (111) eingefügt ist, eine dem Block von Nutzerdaten (105; 105a-105m) zugeordnete Sendeentität zu erzeugen und einen Zustand der Sendeentität in Abhängigkeit von dem empfangenen Rückkopplungssignal (117) zu aktualisieren; und
wobei der Zustand einer erzeugten Sendeentität angibt, welcher zusätzliche inkrementale Redundanzblock (109a-109n) des zugeordneten Blocks von Nutzerdaten (105; 105a-105m) der Sendeentität als Nächstes gesendet werden soll, falls das empfangene Rückkopplungssignal ein erfolgloses Decodieren für den zugeordneten Block von Nutzerdaten (105; 105a-105m) der Sendeentität angibt,
wobei der Sendesignalbereitsteller (103) dazu konfiguriert ist, das Sendesignal mit dem zumindest einen einer Anzahl von Nachrichtenblöcken (107) und einer Anzahl inkrementaler Redundanzblöcke (109a - 109n) in einer vorbestimmten Reihenfolge zu füllen, indem er eine Liste der erzeugten Sendeentitäten durchgeht, für jede Sendeentität den inkrementalen Redundanzblock (109a-109n) ihres zugeordneten Blocks von Nutzerdaten (105; 105a-105m), der durch den Zustand der Sendeentität angegeben wird, zu umfassen und in dem Fall, dass das Ende der Liste erreicht ist und in dem Sendesignal immer noch Raum verbleibt, das Sendesignal so lange mit zumindest einem neuen Nachrichtenblock zu füllen, bis das Sendesignal voll ist oder bis alle neuen Nachrichtenblöcke eingefügt wurden.

2. Der Sender (100) gemäß Anspruch 1,
bei dem das Rückkopplungssignal (117) für einen gegebenen Block von Nutzerdaten (105; 105a-105m), die zu decodieren sind, Redundanzinformationen aufweist, die eine Mindestanzahl zusätzlicher inkrementaler Redundanzblöcke (109a-109n) angeben, die an den Empfänger (200) gesendet werden sollen, um den gegebenen Block von Nutzerdaten (105; 105a-105m) in einer Empfangsentität (205a-205m) des Empfängers (200), der dem Block vom Nutzerdaten (105; 105a-105m) zugeordnet ist, zu decodieren; und
bei dem der Sendesignalbereitsteller (103) dazu konfiguriert ist, in Abhängigkeit von den empfangenen Redundanzinformationen die Mindestanzahl inkrementaler Redundanzblöcke (109a-109n) des Blocks von Nutzerdaten (105; 105a-105m) in das Sendesignal (111) einzufügen.

3. Der Sender (100) gemäß einem der Ansprüche 1 oder 2,
bei dem die Entitätserzeugungseinrichtung (115) dazu konfiguriert ist, eine erzeugte Sendeentität zu zerstören, falls ein Zustand der erzeugten Sendeentität eine abgeschlossene Verarbeitung des zugeordneten Blocks von Nutzerdaten (105; 105a-105m) der erzeugten Sendeentität angibt,
wobei der Zustand einer erzeugten Sendeentität eine abgeschlossene Verarbeitung des zugeordneten Blocks von Nutzerdaten (105; 105a-105m) der erzeugten Sendeentität angibt, falls das empfangene Rückkopplungssignal ein erfolgreiches Decodieren für den zugeordneten Block von Nutzerdaten (105; 105a-105m) besagter Sendeentität angibt.

4. Der Sender (100) gemäß einem der Ansprüche 1 bis 3,
bei dem der Sendesignalbereitsteller (103) dazu konfiguriert ist, in Abhängigkeit von der Kapazität des Kanals eine maximale Größe des Sendesignals (111) zu bestimmen; und
bei dem in dem Fall, dass nach dem Einfügen aller neuen Nachrichtenblöcke in dem Sendesignal immer noch Raum ist, der Sendesignalbereitsteller (103) dazu konfiguriert ist, das Sendesignal (111) weiter zu füllen, indem er erneut die Liste von Sendeentitäten durchgeht und so lange für jede Sendeentität den nächsten zusätzlichen inkrementalen Redundanzblock (109a - 109n) ihres zugeordneten Blocks von Nutzerdaten (105; 105a-105m) einfügt, bis die maximale Größe des Sendesignals erreicht ist.

5. Der Sender (100) gemäß einem der Ansprüche 1 bis 4,
bei dem der Sendesignalbereitsteller (103) ferner dazu konfiguriert ist, das Sendesignal (111) derart bereitzustellen, dass die Signalisierungsinformationen (119) ferner angeben, ob das letzte durch die Empfangsschnittstelle (113) empfangene Rückkopplungssignal (117) fehlerhaft war.

6. Der Sender (100) gemäß Anspruch 5,
wobei der Sender (100) dazu konfiguriert ist, falls das letzte empfangene Rückkopplungssignal (117) fehlerhaft war, das letzte Rückkopplungssignal (117) mit einem gegebenen Bitmuster zu vergleichen; und
bei dem der Entitätsverwalter (115) dazu konfiguriert ist, falls eine gegebene Ähnlichkeitsschwelle zwischen dem letzten empfangenen Rückkopplungssignal (117) und dem gegebenen Bitmuster nicht überschritten wird, den Zustand jeder erzeugten Sendeentität unabhängig von Rückkopplungscodes in dem letzten empfangenen Rückkopplungssignal (117) zu aktualisieren, so dass für jede erzeugte Sendeentität der nächste inkrementale Redundanzblock (119a - 119n) des zugeordneten Blocks von Nutzerdaten (105; 105a-105m) der erzeugten Sendeentität übertragen werden soll, falls nicht alle inkrementalen Redundanzblöcke (109a - 109n) des zugeordneten Blocks von Nutzerdaten (105; 105a-105m) der erzeugten Sendeentität bereits gesendet wurden.

7. Der Sender (100) gemäß Anspruch 6,
bei dem der Entitätsverwalter (115) dazu konfiguriert ist, falls die gegebene Ähnlichkeitsschwelle zwischen dem letzten Rückkopplungssignal (117) und dem gegebenen Bitmuster überschritten wird, einen Zustand jeder erzeugten Sendeentität auf einen Anfangszustand zurückzusetzen, so dass für jede erzeugte Sendeentität der Nachrichtenblock (107) des zugeordneten Blocks von Nutzerdaten (105; 105a-105m) der Sendeentität gesendet werden soll.

8. Der Sender (100) gemäß einem der Ansprüche 5 bis 7,
bei dem die Empfangsschnittstelle (113) dazu konfiguriert ist, das Rückkopplungssignal (117) mit einer Mehrzahl gegebener unterschiedlicher Coderaten zu decodieren und in dem Fall, dass für keine der gegebenen Coderaten ein Decodieren des Rückkopplungssignals (117) erfolgreich war, das Rückkopplungssignal (117) als fehlerhaft zu definieren.

9. Der Sender (100) gemäß einem der Ansprüche 1 bis 8,
bei dem der Sendesignalbereitsteller (103) dazu konfiguriert ist, das Sendesignal (111) derart bereitzustellen, dass die Nachrichtenblöcke (107) und inkrementalen Redundanzblöcke (109a-10n) unterschiedlicher Blöcke von Nutzerdaten (105; 105a-105m) nacheinander in dem Sendesignal (111) ohne weitere Kopfblockinformationen zwischen denselben angeordnet sind.

10. Ein Kommunikationssystem, das folgende Merkmale aufweist:
einen Sender (100) gemäß einem der Ansprüche 1 bis 9; und
einen Empfänger (200) zum Empfangen der Blöcke von Nutzerdaten (105; 105a-105m) durch den Kanal variabler Kapazität, wobei der Empfänger (200) folgende Merkmale aufweist:
eine Empfangsschnittstelle (201), die dazu konfiguriert ist, das Sendesignal (111) durch den Kanal zu empfangen; und
einen Entitätsverwalter (203), der dazu konfiguriert ist, in Abhängigkeit von der Anzahl neuer Nachrichtenblöcke (107), die durch die Signalisierungsinformationen (119) angegeben werden, eine Anzahl von Empfangsentitäten (205a-205m) zu erzeugen, wobei jede Empfangsentität (205a-205m) dazu konfiguriert ist, einen zugeordneten Block von Nutzerdaten (105; 105a-105m) zu decodieren,
wobei die Empfangsschnittstelle (201) dazu konfiguriert ist, das Sendesignal unter Verwendung einer Liste der erzeugten Empfangsentitäten in dem Empfänger, die der Liste erzeugter Sendeentitäten in dem Sender entspricht, zu entladen.

11. Das Kommunikationssystem gemäß Anspruch 10,
bei dem eine erzeugte Empfangseinheit (205a-205m) dazu konfiguriert ist, ein Decodieren ihres zugeordneten Blocks von Nutzerdaten (105; 105a-105m) zu beginnen, indem sie einen Nachrichtenblock (107) des zugeordneten Blocks von Nutzerdaten (105; 105a-105m) der erzeugten Empfangsentität codiert, und dazu, auf ein erfolgsloses oder erfolgreiches Decodieren des Nachrichtenblocks (107) hin einen Zustand der erzeugten Empfangsentität (205a-205m) zu aktualisieren, wobei der Zustand der erzeugten Empfangsentität angibt, welcher codierte Block (107, 109a-109n), der dem Block von Nutzerdaten (105; 105a-105m) der erzeugten Empfangsentität zugeordnet ist, zuletzt empfangen wurde.

12. Das Kommunikationssystem gemäß einem der Ansprüche 10 und 11,
bei dem eine erzeugte Empfangsentität (205a-205m) dazu konfiguriert ist, auf einen Empfang zumindest eines inkrementalen Redundanzblocks (109a-109n) des Blocks von Nutzerdaten (105; 105a-105m) der erzeugten Empfangsentität hin den zumindest einen inkrementalen Redundanzblock (109a-109n) mit einem Nachrichtenblock (107) des Blocks von Nutzerdaten (105; 105a-105m) der erzeugten Empfangsentität zu kombinieren, einen resultierenden kombinierten Block zu decodieren und auf ein erfolgloses oder erfolgreiches Decodieren des kombinierten Blocks hin den Zustand der erzeugten Empfangsentität (205a-205m) zu aktualisieren, wobei der Zustand der erzeugten Empfangsentität angibt, welcher codierte Block (107, 109a-109n), der dem Block von Nutzerdaten (105; 105a-105m) der erzeugten Empfangsentität zugeordnet ist, zuletzt empfangen wurde.

13. Das Kommunikationssystem gemäß einem der Ansprüche 10 bis 12, das ferner Folgendes aufweist:
einen Rückkopplungssignalbereitsteller (207), der dazu konfiguriert ist, das Rückkopplungssignal (117) bereitzustellen, wobei ein erster Wert des Rückkopplungscodes, der dem Block von Nutzerdaten (105; 105a-105m) der erzeugten Empfangsentität zugeordnet ist, einem erfolgreichen Decodieren des Blocks von Nutzerdaten entspricht und ein zweiter Wert des Rückkopplungscodes, der dem Block von Nutzerdaten (105; 105a-105m) der erzeugten Empfangsentität zugeordnet ist, einem erfolglosen Decodieren des Blocks von Nutzerdaten entspricht; und
wobei der erste Wert und der zweite Wert unabhängig von einem aktuellen Zustand der erzeugten Empfangsentität (205a-205m) sind, wobei der Zustand der erzeugten Empfangsentität angibt, welcher codierte Block (107, 109a-109n), der dem Block von Nutzerdaten (105; 105a-105m) der erzeugten Empfangsentität zugeordnet ist, zuletzt empfangen wurde.

14. Das Kommunikationssystem gemäß Ansprüchen 10 bis 12, das ferner folgende Merkmale aufweist:
einen Rückkopplungssignalbereitsteller (207), der dazu konfiguriert ist, das Rückkopplungssignal (117) bereitzustellen und in Abhängigkeit von der Kapazität des Kanals eine Coderate des Rückkopplungssignals (117) zu wählen;
wobei der Rückkopplungssignalbereitsteller (207) dazu konfiguriert ist, für eine gewählte Coderate des Rückkopplungssignals (117) das Rückkopplungssignal (117) bereitzustellen, indem er für jede erzeugte Empfangsentität (205a-205m) so lange einen zugeordneten Rückkopplungscode in das Rückkopplungssignal (117) einfügt, der angibt, ob ein Decodieren des Blocks von Nutzerdaten (105; 105a-105m) der erzeugten Empfangsentität erfolgreich war, bis eine maximale Kapazität des Rückkopplungssignals (117) für die gewählte Coderate erreicht ist oder bis das Rückkopplungssignal (117) für jede erzeugte Empfangsentität (205a-205m) einen zugeordneten Rückkopplungscode aufweist.

15. Das Kommunikationssystem gemäß einem der Ansprüche 10 bis 14,
bei dem eine erzeugte Empfangsentität (205a-205m) dazu konfiguriert ist, auf der Basis eines empfangenen Nachrichtenblocks (107) gegenseitige Informationen ihres zugeordneten Blocks von Nutzerdaten (105; 105a-105m) zu bestimmen, und in dem Fall, dass inkrementale Redundanzblöcke (109a-109n) des Blocks von Nutzerdaten (105; 105a-105m) der erzeugten Empfangsentität bereits an die erzeugte Empfangsentität (205a-205m) gesendet wurden, auf der Basis dieser inkrementalen Redundanzblöcke (109a-109n) die ermittelten gegenseitigen Informationen mit einer Gegenseitige-Informationen-Schwelle zu vergleichen und das Decodieren des Blocks von Nutzerdaten (105; 105a-105m) der erzeugten Empfangsentität zu beginnen, falls die ermittelten gegenseitigen Informationen die Gegenseitige-Informationen-Schwelle überschreiten.

16. Das Kommunikationssystem gemäß Anspruch 15,
bei dem die erzeugte Empfangsentität (205a-205m) dazu konfiguriert ist, auf der Basis der ermittelten gegenseitigen Informationen eine Mindestanzahl zusätzlicher inkrementaler Redundanzblöcke (109a-109n) zu bestimmen, die für ein erfolgreiches Decodieren des Blocks von Nutzerdaten (105; 105a-105m) der erzeugten Empfangsentität benötigt werden; und
bei dem der Empfänger (200) ferner einen Rückkopplungssignalbereitsteller (207) aufweist, der dazu konfiguriert ist, ein Rückkopplungssignal (117) bereitzustellen, das Redundanzinformationen aufweist, die die Anzahl zusätzlicher inkrementaler Redundanzblöcke (109a-109n) angeben, die für ein erfolgreiches Decodieren des Blocks von Nutzerdaten (105; 105a-105m) der erzeugten Empfangsentität benötigt werden.

17. Das Kommunikationssystem gemäß Anspruch 10 bis 12, das ferner folgende Merkmale aufweist:
einen Rückkopplungssignalbereitsteller (207), der dazu konfiguriert ist, das Rückkopplungssignal (117) bereitzustellen, das angibt, ob ein Decodieren eines Blocks von Nutzerdaten seitens einer erzeugten Empfangsentität (205a-205m) erfolgreich war oder nicht, wobei das Rückkopplungssignal (117) zumindest ein Fehlerkorrekturbit für eine Fehlerkorrekturprüfung an einem Sender (100) aufweist, der dazu konfiguriert ist, das Rückkopplungssignal (117) zu empfangen;
wobei der Rückkopplungssignalbereitsteller (207) dazu konfiguriert ist, in dem Fall, dass das empfangene Sendesignal (111) fehlerhaft ist, das Rückkopplungssignal (117) mit einem gegebenen Bitmuster unabhängig von den Zuständen der erzeugten Empfangsentitäten (205a-205m) zu versehen; und
bei dem das gegebene Bitmuster bewirkt, dass die Fehlerkorrekturprüfung des Rückkopplungssignals (117), das an dem das Rückkopplungssignal (117) empfangenden Sender (100) durchgeführt wird, fehlschlägt.

18. Das Kommunikationssystem gemäß einem der Ansprüche 10 bis 17,
bei dem der Entitätsverwalter (203) dazu konfiguriert ist, in dem Fall, dass das empfangene Sendesignal (111) fehlerhaft ist, die erzeugten Empfangsentitäten (205a-205m) in einen Zustand zurückzuversetzen, in dem jede erzeugte Empfangsentität (205a-205m) darauf wartet, dass ein Nachrichtenblock (107) des Blocks von Nutzerdaten (105; 105a-105m) der erzeugten Empfangsentität erneut empfangen wird.

19. Ein Verfahren (800) zum Senden von Blöcken von Nutzerdaten (105; 105a-105m) durch einen Kanal variabler Kapazität, wobei jeder Block von Nutzerdaten (105; 105a-105m) zu einem Nachrichtenblock (107) und einer Mehrzahl inkrementaler Redundanzblöcke (109a-109n) codiert wird, wobei das Verfahren (800) folgende Schritte aufweist:
Bereitstellen (801) eines Sendesignals (111), das durch den Kanal gesendet werden soll, wobei das Sendesignal (111) zumindest einen einer Anzahl von Nachrichtenblöcken (107) und eine Anzahl inkrementaler Redundanzblöcke (109a-109n), je nach der Kapazität des Kanals, und Signalisierungsinformationen (119), die die Anzahl neuer Nachrichtenblöcke (107) in dem Sendesignal (111) angeben, aufweist; und
Senden (803) des Sendesignals (111) durch den Kanal,
seitens einer Empfangsschnittstelle (113), Empfangen eines Rückkopplungssignals (117), das Zustandsveränderungen von Empfangsentitäten (205a-205m) in einem Empfänger (200) angibt, der die seitens einer Empfangsschnittstelle (113) durch den Kanal gesendeten Blöcke von Nutzerdaten (105; 105a-105m) verarbeitet;
seitens eines Entitätsverwalters (115), Erzeugen, für jeden Block von Nutzerdaten (105; 105a-105m), dessen Nachrichtenblock (107) seitens des Sendesignalbereitstellers (103) in das Sendesignal (111) eingefügt ist, einer dem Block von Nutzerdaten (105; 105a-105m) zugeordneten Sendeentität und Aktualisieren eines Zustands der Sendeentität in Abhängigkeit von dem empfangenen Rückkopplungssignal (117),
wobei der Zustand einer erzeugten Sendeentität angibt, welcher zusätzliche inkrementale Redundanzblock (109a-109n) des zugeordneten Blocks von Nutzerdaten (105; 105a-105m) der Sendeentität als Nächstes gesendet werden soll, falls das empfangene Rückkopplungssignal ein erfolgloses Decodieren für den zugeordneten Block von Nutzerdaten (105; 105a-105m) der Sendeentität angibt,
wobei das Sendesignal bereitgestellt wird, indem das Sendesignal mit dem zumindest einen einer Anzahl von Nachrichtenblöcken (107) und einer Anzahl inkrementaler Redundanzblöcke (109a - 109n) in einer vorbestimmten Reihenfolge gefüllt wird, indem eine Liste der erzeugten Sendeentitäten durchgegangen wird, indem für jede Sendeentität der inkrementale Redundanzblock (109a-109n) ihres zugeordneten Blocks von Nutzerdaten (105; 105a-105m), der durch den Zustand der Sendeentität angegeben wird, umfasst wird und in dem Fall, dass das Ende der Liste erreicht ist und in dem Sendesignal immer noch Raum verbleibt, das Sendesignal so lange mit zumindest einem neuen Nachrichtenblock gefüllt wird, bis das Sendesignal voll ist oder bis alle neuen Nachrichtenblöcke eingefügt wurden.

20. Ein Computerprogramm, das einen Programmcode zum Durchführen, wenn es auf einem Computer abläuft, eines Verfahrens gemäß Anspruch 19 aufweist.

## Revendications

1. Emetteur (100) pour transmettre des blocs de données d'utilisateur (105; 105a à 105m) à travers un canal de capacité variable, l'émetteur (100) comprenant:
un codeur (101) configuré pour coder chaque bloc de données d'utilisateur (105; 105a à 105m) pour obtenir un bloc de message (107) et une pluralité de blocs de redondance incrémentale (109a à 109n);
un fournisseur de signal d'émission (103) configuré pour fournir un signal d'émission à transmettre à travers le canal, où le signal d'émission (111) comprend au moins l'un parmi un nombre de blocs de messages (107) et un nombre de blocs de redondance incrémentale (109a à 109 n), en fonction de la capacité du canal, et des informations de signalisation (119) indiquant le nombre de nouveaux blocs de message (107) dans le signal d'émission (111);
une interface de réception (113) configurée pour recevoir un signal de rétroaction (117) indiquant si le décodage d'un bloc de données d'utilisateur par une entité de réception (205a à 205m) dans un récepteur (200) qui traite le bloc de données d'utilisateur (105; 105a à 105m) transmis à travers le canal a été fructueux ou non;
un gestionnaire d'entités (115) configuré pour générer, pour chaque bloc de données d'utilisateur (105; 105a à 105m) dont le bloc de message (107) est inséré dans le signal d'émission (111) par le fournisseur de signal d'émission (103), une entité d'émission associée au bloc de données d'utilisateur (105; 105a à 105m) et pour mettre à jour un état de l'entité d'émission en fonction du signal de rétroaction reçu (117); et
dans lequel l'état d'une entité d'émission générée indique le bloc de redondance incrémental additionnel (109a à 109n) du bloc de données d'utilisateur (105; 105a à 105m) associé de l'entité d'émission qui doit être transmis ensuite si le signal de rétroaction reçu indique un décodage infructueux pour ledit bloc de données d'utilisateur (105; 105a à 105m) associé de l'entité d'émission,
dans lequel le fournisseur de signal d'émission (103) est configuré pour remplir le signal d'émission de l'au moins un parmi un nombre de blocs de message (107) et un nombre de blocs de redondance incrémentale (109a à 109n) dans un ordre prédéterminé en passant par une liste des entités d'émission générées, pour inclure, pour chaque entité d'émission, le bloc de redondance incrémentale (109a à 109n) de son bloc de données d'utilisateur associé (105; 105a à 105m) indiqué par l'état de l'entité d'émission et, lorsque la fin de la liste est atteinte et qu'il reste encore de la place dans le signal d'émission, pour remplir le signal d'émission d'au moins un nouveau bloc de message jusqu'à ce que le signal d'émission soit rempli ou jusqu'à ce que tous les nouveaux blocs de message aient été insérés.

2. Emetteur (100) selon la revendication 1,
dans lequel le signal de rétroaction (117) comprend, pour un bloc de données d'utilisateur donné (105; 105a à 105m) à décoder, des informations de redondance indiquant un nombre minimum de blocs de redondance incrémentale additionnels (109a à 109n) à transmettre au récepteur (200) pour décoder le bloc de données de l'utilisateur donné (105; 105a à 105m) dans une entité de réception (205a à 205m) du récepteur (200) associé au bloc de données d'utilisateur (105; 105a à 105m); et
dans lequel le fournisseur de signal d'émission (103) est configuré pour insérer, en fonction des informations de redondance reçues, le nombre minimum de blocs de redondance incrémentale (109a à 109n) du bloc de données d'utilisateur (105; 105a à 105m) dans le signal d'émission (111).

3. Emetteur (100) selon l'une des revendications 1 ou 2,
dans lequel le générateur d'entités (115) est configuré pour détruire une entité d'émission générée si un état de l'entité d'émission générée indique un traitement fini du bloc de données d'utilisateur (105; 105a à 105m) associé de l'entité d'émission générée,
dans lequel l'état d'une entité d'émission générée indique un traitement fini du bloc de données d'utilisateur (105; 105a à 105m) associé de l'entité d'émission générée si le signal de rétroaction reçu indique un décodage fructueux pour le bloc de données d'utilisateur (105; 105a à 105m) associé de ladite entité d'émission.

4. Emetteur (100) selon l'une des revendications 1 à 3,
dans lequel le fournisseur de signal d'émission (103) est configuré pour déterminer, en fonction de la capacité du canal, une grandeur maximale du signal d'émission (111); et
dans lequel, si après avoir inséré tous les nouveaux blocs de message, il reste encore de la place dans le signal d'émission, le fournisseur de signal d'émission (103) est configuré pour remplir davantage le signal d'émission (111) en passant à nouveau par la liste d'entités d'émission et pour insérer, pour chaque entité d'émission, le bloc de redondance incrémentale additionnel suivant (109a à 109n) de son bloc de données d'utilisateur (105; 105a à 105m) associé, jusqu'à ce que la grandeur maximale du signal d'émission soit atteinte.

5. Emetteur (100) selon l'une des revendications 1 à 4,
dans lequel le fournisseur de signal d'émission (103) est par ailleurs configuré pour fournir le signal d'émission (111) de sorte que les informations de signalisation (119) indiquent par ailleurs si le dernier signal de rétroaction (117) reçu par l'interface de réception (113) a été altéré.

6. Emetteur (100) selon la revendication 5,
dans lequel l'émetteur (100) est configuré pour comparer, si le dernier signal de rétroaction reçu (117) a été altéré, le dernier signal de rétroaction (117) avec un modèle de bits donné; et
dans lequel le gestionnaire d'entités (115) est configuré pour mettre à jour, si un seuil de similitude donné entre le dernier signal de rétroaction reçu (117) et le modèle de bits donné n'est pas excédé, l'état de chaque entité d'émission générée indépendamment des codes de rétroaction dans le dernier signal de rétroaction reçu (117), de sorte que, pour chaque entité d'émission générée, le bloc de redondance incrémentale (119a à 119n) suivant du bloc de données d'utilisateur (105; 105a à 105m) associé de l'entité d'émission générée doive être transmis, si tous les blocs de redondance incrémentale (109a à 109n) du bloc de données d'utilisateur (105; 105a à 105m) associé de l'entité d'émission générée n'étaient pas déjà transmis.

7. Emetteur (100) selon la revendication 6,
dans lequel le gestionnaire d'entités (115) est configuré pour rétablir, si le seuil de similitude donné entre le dernier signal de rétroaction (117) et le modèle de bits donné est excédé, un état de chaque entité d'émission générée à un état initial, de sorte que, pour chaque entité d'émission générée, le bloc de message (107) du bloc de données d'utilisateur (105; 105a à 105m) associé de l'entité d'émission doive être transmis.

8. Emetteur (100) selon l'une des revendications 5 à 7,
dans lequel l'interface de réception (113) est configurée pour décoder le signal de rétroaction (117) à une pluralité de vitesses de codage différentes données et pour définir, si pour aucune des vitesses de codage données un décodage du signal de rétroaction (117) n'était fructueux, le signal de rétroaction (117) comme étant altéré.

9. Emetteur (100) selon l'une des revendications 1 à 8,
dans lequel le fournisseur de signal d'émission (103) est configuré pour fournir le signal d'émission (111) de sorte que les blocs de messages (107) et les blocs de redondance incrémentale (109a à 10n) de différents blocs de données d'utilisateur (105; 105a à 105m) soient disposés successivement dans le signal d'émission (111) sans informations d'en-tête additionnelles entre eux.

10. Système de communication, comprenant:
un émetteur (100) selon l'une des revendications 1 à 9; et
un récepteur (200) destiné à recevoir les blocs de données d'utilisateur (105; 105a à 105m) à travers le canal de capacité variable, le récepteur (200) comprenant:
une interface de réception (201) configurée pour recevoir le signal d'émission (111) à travers le canal; et
un gestionnaire d'entités (203) configuré pour générer, en fonction du nombre de nouveaux blocs de message (107) indiqué par l'information de signalisation (119), un nombre d'entités de réception (205a à 205m), où chaque entité de réception (205a à 205m) est configurée pour décoder un bloc de données d'utilisateur (105; 105a à 105m) associé,
dans lequel l'interface de réception (201) est configurée pour décharger le signal d'émission à l'aide d'une liste des entités de réception générées dans le récepteur correspondant à la liste des entités d'émission générées dans l'émetteur.

11. Système de communication selon la revendication 10,
dans lequel une entité de réception générée (205a à 205m) est configurée pour commencer à décoder son bloc de données d'utilisateur (105; 105a à 105m) associé en décodant un bloc de message (107) du bloc de données d'utilisateur (105; 105a à 105m) associé de l'entité de réception générée et pour mettre à jour, après un décodage infructueux ou fructueux du bloc de message (107), un état de l'entité de réception générée (205a à 205m), où l'état de l'entité de réception générée indique le bloc codé (107, 109a à 109n) associé au bloc de données d'utilisateur de l'entité de réception générée (105; 105a à 105m) qui a été reçu en dernier lieu.

12. Système de communication selon l'une des revendications 10 et 11,
dans lequel une entité de réception générée (205a à 205m) est configurée pour combiner, à la réception d'au moins un bloc de redondance incrémentale (109a à 109n) du bloc de données d'utilisateur (105; 105a à 105m) de l'entité de réception générée. au moins un bloc de redondance incrémentale (109a à 109n) avec un bloc de message (107) du bloc de données d'utilisateur (105; 105a à 105m) de l'entité de réception générée, décoder un bloc combiné résultant et, en cas de décodage infructueux ou fructueux du bloc combiné, mettre à jour l'état de l'entité de réception générée (205a à 205m), dans lequel l'état de l'entité de réception générée indique le bloc codé (107, 109a à 109n) associé au bloc de données d'utilisateur (105; 105a à 105m) de l'entité de réception générée qui a été reçu en dernier lieu.

13. Système de communication selon l'une des revendications 10 à 12, comprenant par ailleurs:
un fournisseur de signal de rétroaction (207) configuré pour fournir le signal de rétroaction (117), où une première valeur du code de rétroaction associé au bloc de données d'utilisateur (105; 105a à 105m) de l'entité de réception générée correspond à un décodage fructueux dudit bloc de données d'utilisateur, et une deuxième valeur du code de rétroaction associé au bloc de données d'utilisateur (105; 105a à 105m) de l'entité de réception générée correspond à un décodage infructueux dudit bloc de données d'utilisateur; et
dans lequel la première valeur et la deuxième valeur sont indépendantes d'un état actuel de l'entité de réception générée (205a à 205m), dans lequel l'état de l'entité de réception générée indique le bloc codé (107, 109a à 109n) associé au bloc de données d'utilisateur (105; 105a à 105m) de l'entité de réception générée qui a été reçu en dernier lieu.

14. Système de communication selon les revendications 10 à 12, comprenant par ailleurs:
un fournisseur de signal de rétroaction (207) configuré pour fournir le signal de rétroaction (117) et pour choisir une vitesse de codage du signal de rétroaction (117) en fonction de la capacité du canal;
dans lequel le fournisseur de signal de rétroaction (207) est configuré pour fournir, pour une vitesse de codage choisie du signal de rétroaction (117), le signal de rétroaction (117) en insérant dans le signal de rétroaction (117), pour chaque entité de réception générée (205a à 205m), un code de rétroaction associé qui indique si un décodage du bloc de données d'utilisateur (105; 105a à 105m) de l'entité de réception générée était fructueux, jusqu'à ce qu'une capacité maximale du signal de rétroaction (117) pour la vitesse de codage choisie soit atteinte ou jusqu'à ce que le signal de rétroaction (117) comprenne, pour chaque entité de réception générée (205a à 205m), un code de rétroaction associé.

15. Système de communication selon l'une des revendications 10 à 14,
dans lequel une entité de réception générée (205a à 205m) est configurée pour déterminer une information mutuelle de son bloc de données d'utilisateur associé (105; 105a à 105m) sur base d'un bloc de message reçu (107) et, si les blocs de redondance incrémentale (109a à 109n) du bloc de données d'utilisateur (105; 105a à 105m) de l'entité de réception générée ont déjà été transmises à l'entité de réception générée (205a à 205m), sur base de ces blocs de redondance incrémentale (109a à 109n), pour comparer l'information mutuelle déterminée avec un seuil d'information mutuelle et pour commencer le décodage du bloc de données d'utilisateur (105; 105a à 105m) de l'entité de réception générée si l'information mutuelle déterminée excède le seuil d'information mutuelle.

16. Système de communication selon la revendication 15,
dans lequel l'entité de réception générée (205a à 205m) est configurée pour déterminer, sur base de l'information mutuelle déterminée, un nombre minimum de blocs de redondance incrémentale additionnels (109a à 109n) nécessaires pour un décodage fructueux du bloc de données d'utilisateur (105; 105a à 105m) de l'entité de réception générée; et
dans lequel le récepteur (200) comprend par ailleurs un fournisseur de signal de rétroaction (207) configuré pour fournir un signal de rétroaction (117) comprenant une information de redondance indiquant le nombre de blocs de redondance additionnels (109a à 109n) nécessaires pour un décodage fructueux du bloc de données de l'utilisateur (105; 105a à 105m) de l'entité de réception générée.

17. Système de communication selon la revendication 10 à 12, comprenant par ailleurs:
un fournisseur de signal de rétroaction (207) configuré pour fournir le signal de rétroaction (117) qui indique si le décodage d'un bloc de données d'utilisateur par une entité de réception générée (205a à 205m) est fructueux ou non, le signal de rétroaction (117) comprenant au moins un bit de correction d'erreur pour une vérification de correction d'erreur dans un émetteur (100) configuré pour recevoir le signal de rétroaction (117);
dans lequel le fournisseur de signal de rétroaction (207) est configuré pour fournir, si le signal d'émission reçu (111) est altéré, le signal de rétroaction (117) avec un modèle de bits donné indépendant des états des entités de réception générées (205a à 205m); et
dans lequel le modèle de bits donné a pour conséquence qu'une vérification de correction d'erreur du signal de rétroaction (117) réalisée à l'émetteur (100) recevant le signal de rétroaction (117) soit infructueuse.

18. Système de communication selon l'une des revendications 10 à 17,
dans lequel le gestionnaire d'entités (203) est configuré pour rétablir, si le signal d'émission reçu (111) est altéré, les entités de réception générées (205a à 205m) à un état dans lequel chaque entité de réception générée (205a à 205m) attend qu'un bloc de message (107) du bloc de données d'utilisateur (105; 105a à 105m) de l'entité de réception générée soit à nouveau reçu.

19. Procédé (800) pour transmettre des blocs de données d'utilisateur (105; 105a à 105m) à travers un canal de capacité variable, dans lequel chaque bloc de données d'utilisateur (105; 105a à 105m) est codé pour obtenir un bloc de message (107) et une pluralité de blocs de redondance incrémentale (109a à 109n), le procédé (800) comprenant le fait de:
fournir (801) un signal d'émission (111) à transmettre à travers le canal, où le signal d'émission (111) comprend au moins l'un parmi un nombre de blocs de message (107) et un nombre de blocs de redondance incrémentale (109a à 109n), en fonction de la capacité du canal, et des informations de signalisation (119) indiquant le nombre de nouveaux blocs de message (107) dans le signal d'émission (111); et
transmettre (803) le signal d'émission (111) à travers le canal,
par une interface de réception (113), recevoir un signal de rétroaction (117) indiquant les variations d'états des entités de réception (205a à 205m) dans un récepteur (200) qui traite les blocs de données d'utilisateur (105; 105a à 105m) transmis à travers le canal par une interface de réception (113);
par un gestionnaire d'entités (115), générer, pour chaque bloc de données d'utilisateur (105; 105a à 105m) dont le bloc de message (107) est inséré dans le signal d'émission (111) par le fournisseur de signal d'émission (103), une entité d'émission associée au bloc de données d'utilisateur (105; 105a à 105m) et mettre à jour un état de l'entité d'émission en fonction du signal de rétroaction reçu (117),
dans lequel l'état d'une entité d'émission générée indique le bloc de redondance incrémental additionnel (109a à 109n) du bloc de données d'utilisateur (105; 105a à 105m) associé de l'entité d'émission qui doit être transmis ensuite, si le signal de rétroaction reçu indique un décodage infructueux pour ledit bloc de données d'utilisateur (105; 105a à 105m) associé de l'entité d'émission,
dans lequel le signal d'émission est fourni en remplissant le signal d'émission par l'au moins un parmi un nombre de blocs de message (107) et un nombre de blocs de redondance incrémentale (109a à 109n) dans un ordre prédéterminé en passant par une liste des entités d'émission générées, en incluant, pour chaque entité d'émission, le bloc de redondance incrémentale (109a à 109n) de son bloc de données d'utilisateur associé (105; 105a à 105m) indiqué par l'état de l'entité d'émission et, lorsque la fin de la liste est atteinte et qu'il reste encore de la place dans le signal d'émission, en remplissant le signal d'émission d'au moins un nouveau bloc de message jusqu'à ce que le signal d'émission soit rempli ou jusqu'à ce que tous les nouveaux blocs de message aient été insérés.

20. Programme d'ordinateur présentant un code de programme pour réaliser, lorsqu'il est exécuté sur un ordinateur, un procédé selon la revendication 19.
